# EUROPEAN PATENT SPECIFICATION

(11) **EP 2 913 911 B1**
(45) Date of publication and mention of the grant of the patent: **01.07.2020**
(21) Application number: 15155004.3
(22) Date of filing: 13.02.2015
(51) Int. Cl.: H02K 15/095

(54) **Machine for producing wire windings on rotor or stator cores, with high versatility of use**
Maschine zur Herstellung von Drahtwicklungen auf einem Rotor oder Statorkernen mit hoher Verwendungsvielseitigkeit
Machine de production d'enroulements de fil sur les noyaux de rotor ou de stator, avec une grande souplesse d'utilisation

(30) Priority: 18.02.2014 IT MI20140234
(43) Date of publication of application: 02.09.2015
(73) Proprietor: Marsilli S.p.A., 26012 Castelleone (CR) (IT)
(72) Inventor: Parati, Gian Battista, 26012 Castelleone CR (IT)
(74) Representative: Modiano, Micaela Nadia

(56) References cited:
- EP-A2- 2 034 592
- EP-A2- 2 388 887
- JP-A- 2003 204 659
- JP-A- 2007 020 251
- JP-A- 2009 261 089
- US-A1- 2002 011 755
- US-A1- 2007 182 271

## Description

The present invention relates to a machine for producing wire windings on rotor or stator cores, with high versatility of use.

Various types of machine are known in the field of machines for producing wire windings on rotor or stator cores for manufacturing rotor or stator poles of electrical or electromechanical components. Machines of this kind are very specific, in that generally they are conceived and provided in order to operate according to a specific winding technique.

Thus, for example, machines are known which are capable of producing exclusively the winding of the wire around rotor or stator cores arranged radially around an axis by turning in each instance about its own axis the core around which the wire has to be wound and by using a device for dispensing the wire that does not rotate around the core but is simply moved along the axis of the core during winding so as to perform the layering of the wire around the core.

Other machines are provided so as to operate in sequence or simultaneously the winding of multiple rotor or stator cores arranged side by side and aligned on a plane. In these machines, the device for dispensing the wire or the devices for dispensing the wires rotate around the core and move along the axis thereof that remains stationary during winding.

Other machines are provided so as to perform the winding in sequence of rotor or stator cores that are arranged radially with their axes with respect to a same axis and are mutually angularly spaced around such axis, keeping the cores stationary during winding and moving the device for dispensing the wire around one core at a time.

Still other machines are provided so as to wind rotor or stator cores that are arranged coaxially and are turned about the common axis during winding while the device for dispensing the wire is moved along the common axis in order to produce the layering of the wire around the core being wound.

In recent years, firms that wind rotor or stator cores have felt increasingly the need to have more versatile machines that can perform different types of windings.
Machines for producing wire windings on rotor or stator cores according to the preamble of claim 1 are known from the documents EP 2034592A2 and JP 2009261089A.

The aim of the present invention is to meet this need by providing a machine for producing wire windings on rotor or stator cores capable of producing different types of windings.

Within this aim, an object of the invention is to provide a machine for producing wire windings on rotor or stator cores that can operate both by keeping the rotor or stator cores stationary or by rotating them during winding.

Another object of the invention is to provide a machine that is relatively easy to use and is highly reliable.

A further object of the invention is to provide a machine that, by reducing the investments necessary to produce multiple types of windings, is economically convenient.

This aim and these and other objects that will become better apparent hereinafter are achieved by a machine for producing wire windings on rotor or stator cores, comprising:
- a main supporting structure;
- a first support, which is associated with said main supporting structure;
- a spindle with a horizontal axis, which is supported so that it can rotate about its own axis by said first support and can be actuated with a rotary motion about its own axis;
- a second support, which is associated with said main supporting structure;
- a tailstock, which is arranged opposite and coaxially with respect to said spindle and is supported so that it can rotate about its own axis by said second support;
- a third support, which is supported by said main supporting structure and can move on command along three mutually perpendicular axes, respectively along two horizontal axes and along a vertical axis;
   at least one between said first support and said second support being movable with respect to the other along a direction that is parallel to the axis of said spindle and of said tailstock and said third support being provided with means for detachable engagement with components of apparatuses for dispensing and/or cutting wires to be wound around rotor or stator cores that can be fitted between said spindle and said tailstock;
characterized in that said spindle (8) and said tailstock (9) are configured for being connected to at least one apparatus for wounding rotor or stator cores, wherein, in order to render the machine capable of producing different types of windings, said spindle (8) and said tailstock (9) are adapted to take different types of winding configurations including at least one of the following winding configurations, each configuration being associated to a respective apparatus:
a) a configuration in which said rotor or stator cores are arranged mutually side by side parallel to the axis (7) of said spindle (8) and of said tailstock (9);
b) a configuration in which said rotor or stator cores (93) are arranged so that their axes lie on a plane that is perpendicular to the axis (7) of said spindle (8) and of said tailstock (9) and are arranged so as to be radially and angularly mutually spaced around the axis (7) of said spindle (8) and of said tailstock (9);
c) a configuration in which said rotor or stator cores (122) are arranged coaxially to said spindle (8) and to said tailstock (9).

Further characteristics and advantages of the invention will become better apparent from the description of a preferred but not exclusive embodiment of the machine according to the invention, illustrated by way of non-limiting example in the accompanying drawings, wherein:

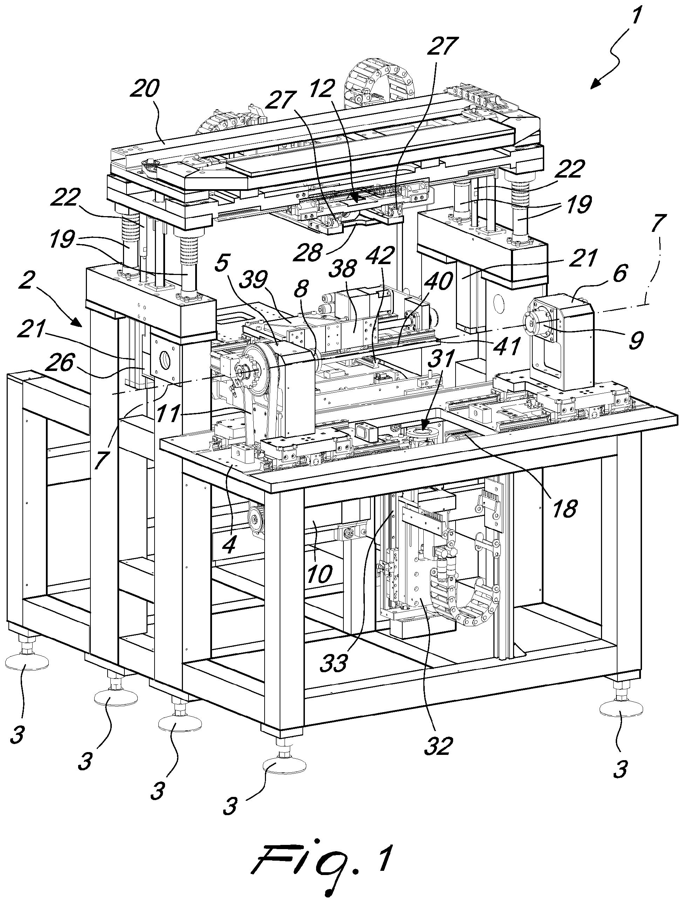

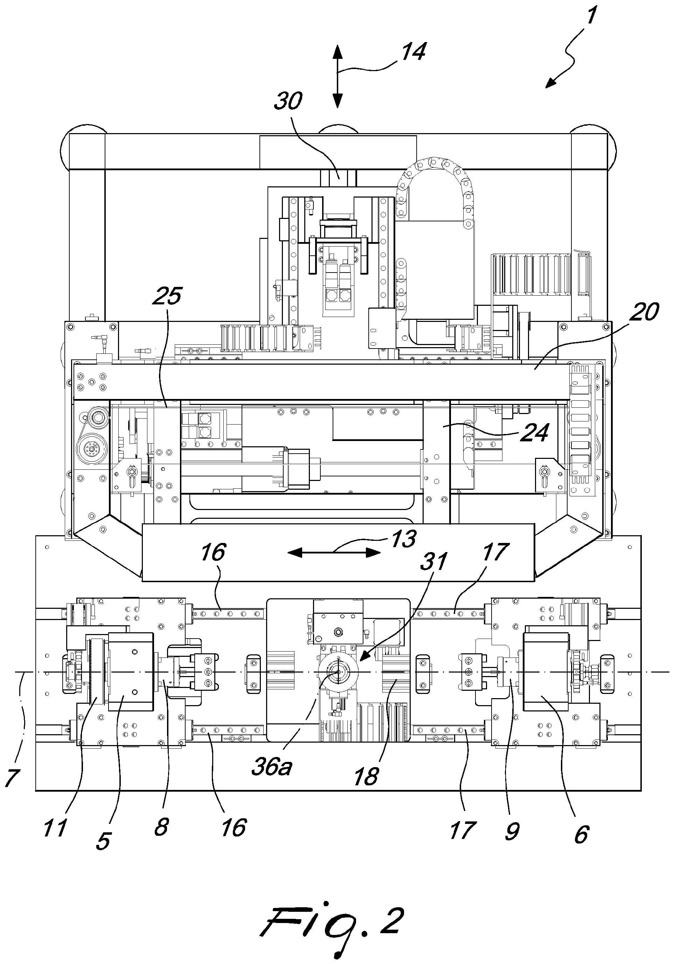

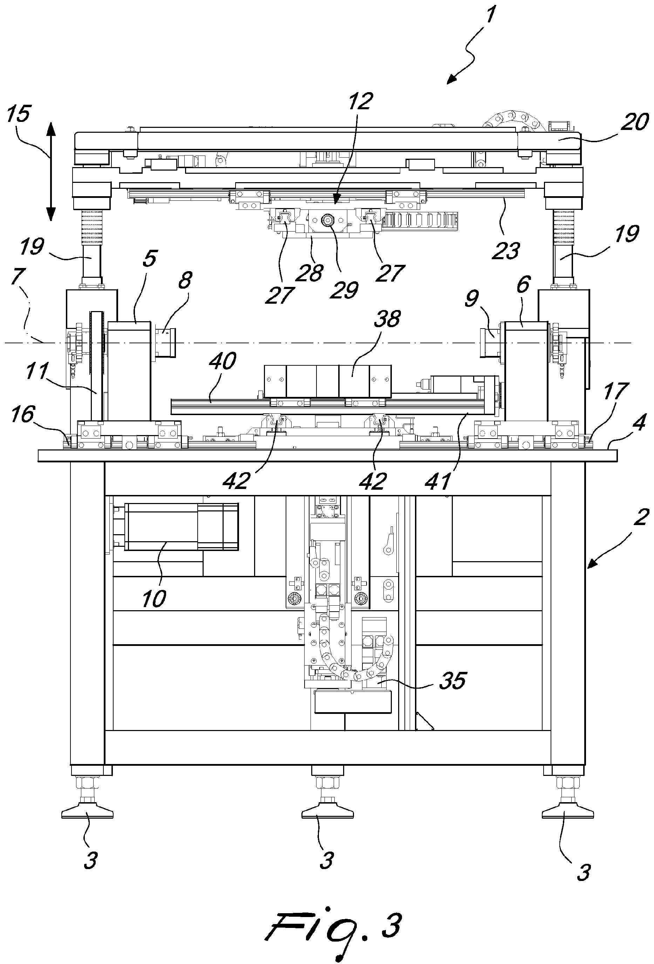

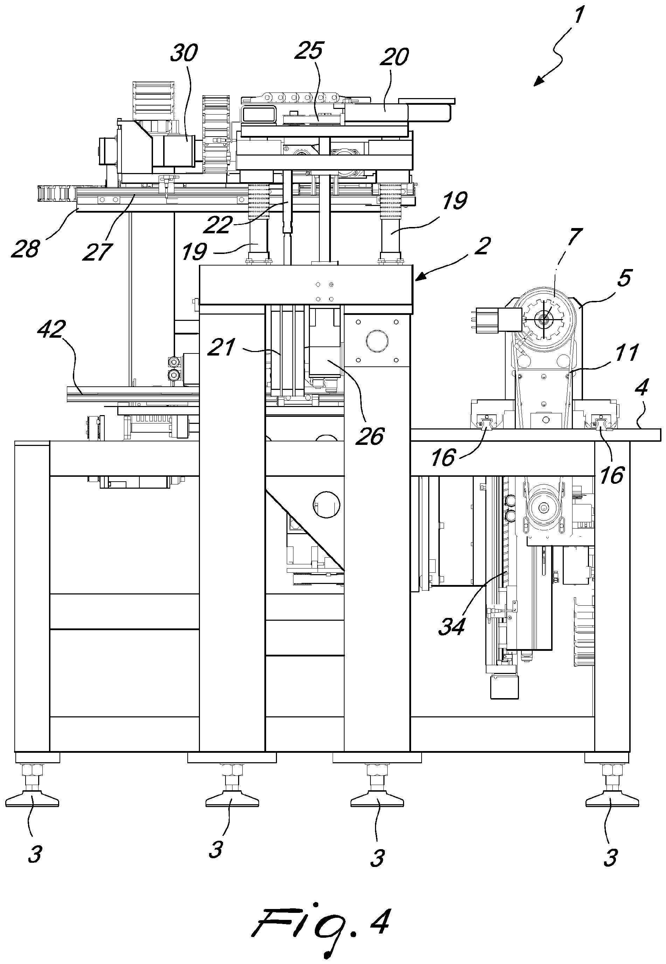

Figures 1 to 4 are views of the machine according to the invention in its basic version ready to receive at least one apparatus for producing at least one type of winding, more particularly:
   Figure 1 is a perspective view of the machine;
   Figure 2 is a top plan view of the machine;
   Figure 3 is a front elevation view of the machine;
   Figure 4 is a side elevation view of the machine;
Figures 5 to 10 are views of a first apparatus that can be mounted on the basic version of the machine for producing a first type of winding, more particularly:

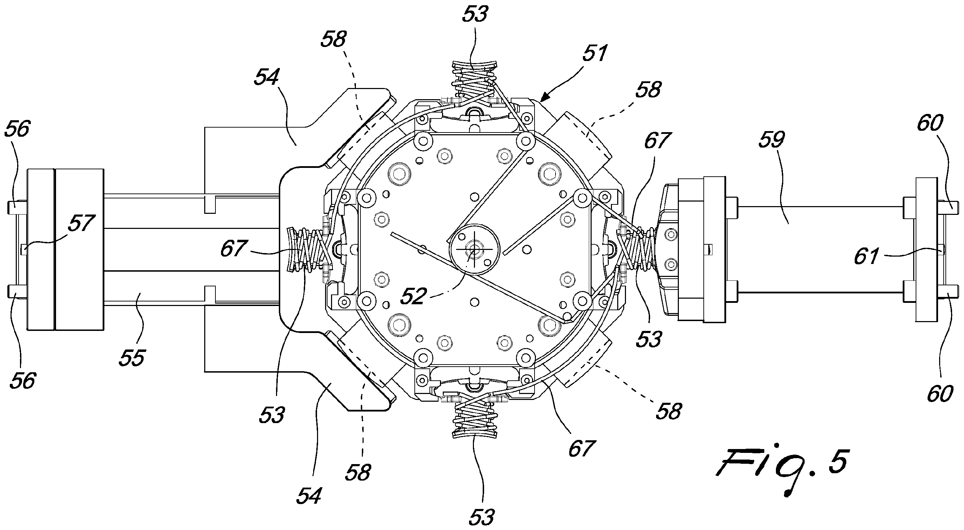

   Figure 5 is a top plan view of a first component of the first apparatus;

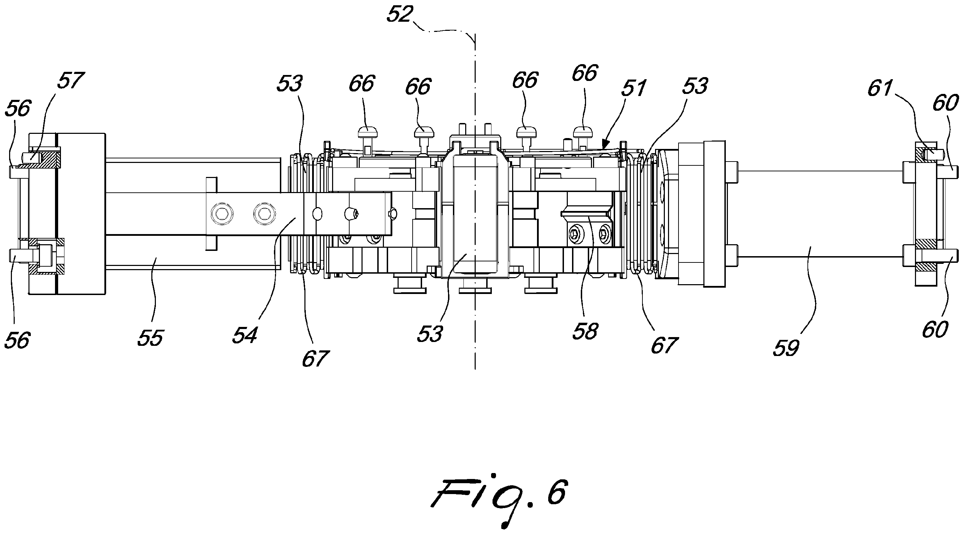

   Figure 6 is a partially sectional front elevation view of the same component of Figure 5;

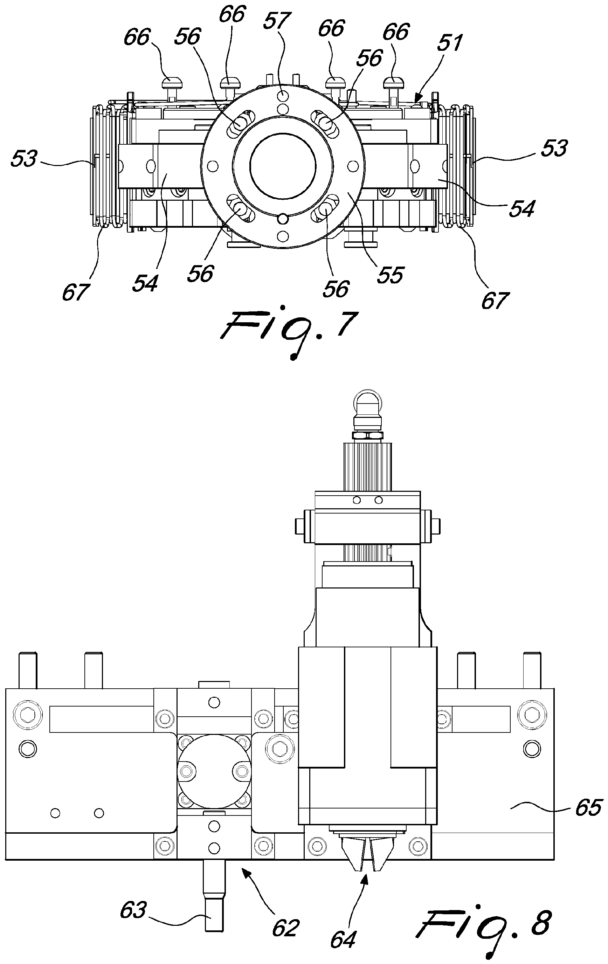

   Figure 7 is again a side elevation view of the same component;
   Figure 8 is a front elevation view of a second component of the first apparatus;

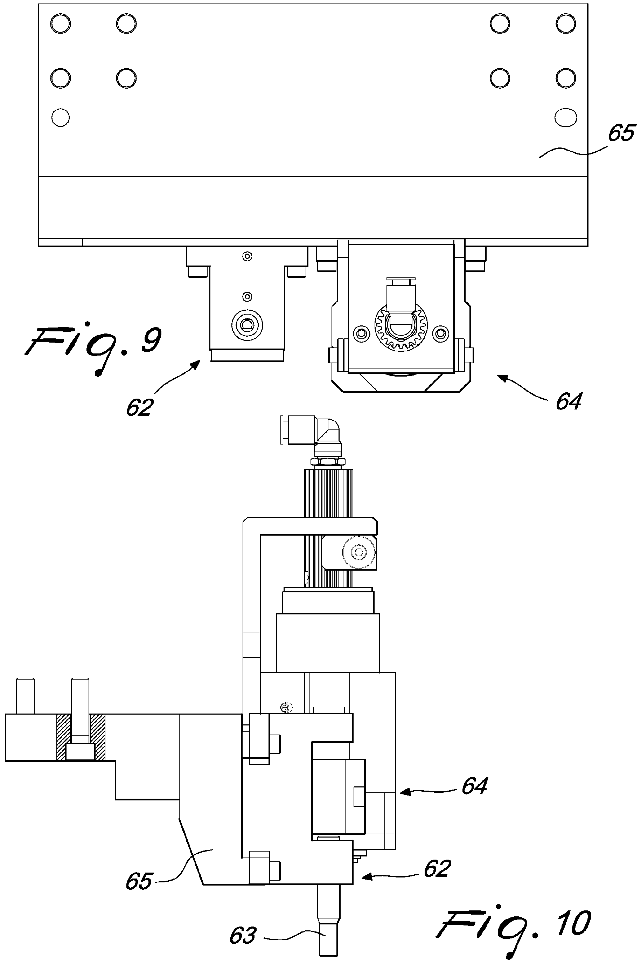

   Figure 9 is a top plan view of the component of Figure 8;
   Figure 10 is again a side elevation view of the same component of Figures 8 and 9;

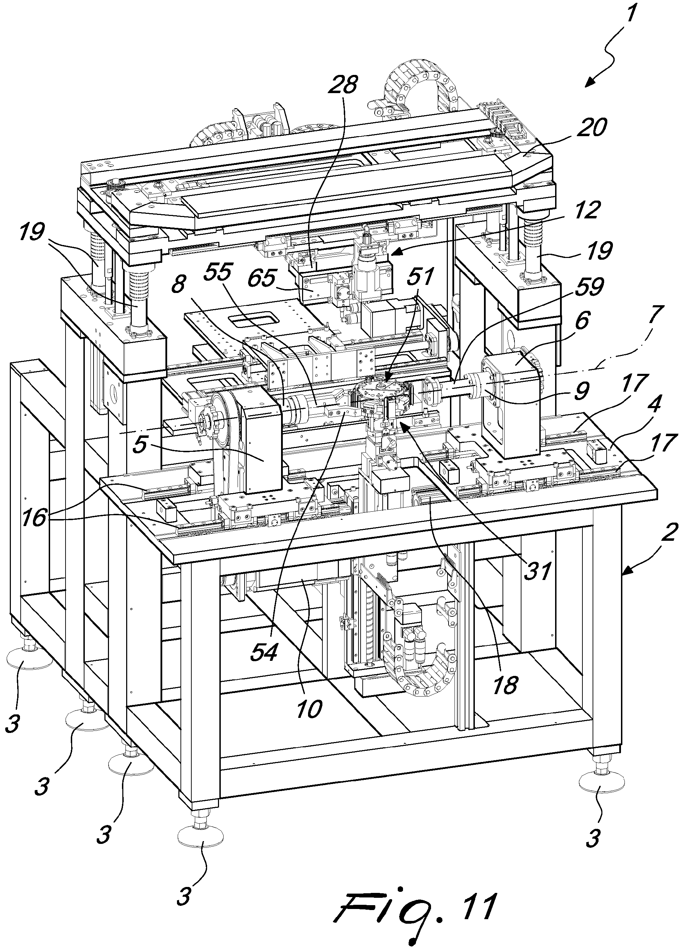

Figures 11 to 17 are views of the machine according to the invention equipped with the first apparatus, more particularly:
   Figure 11 is a perspective view of the machine with the first apparatus during the mounting step;

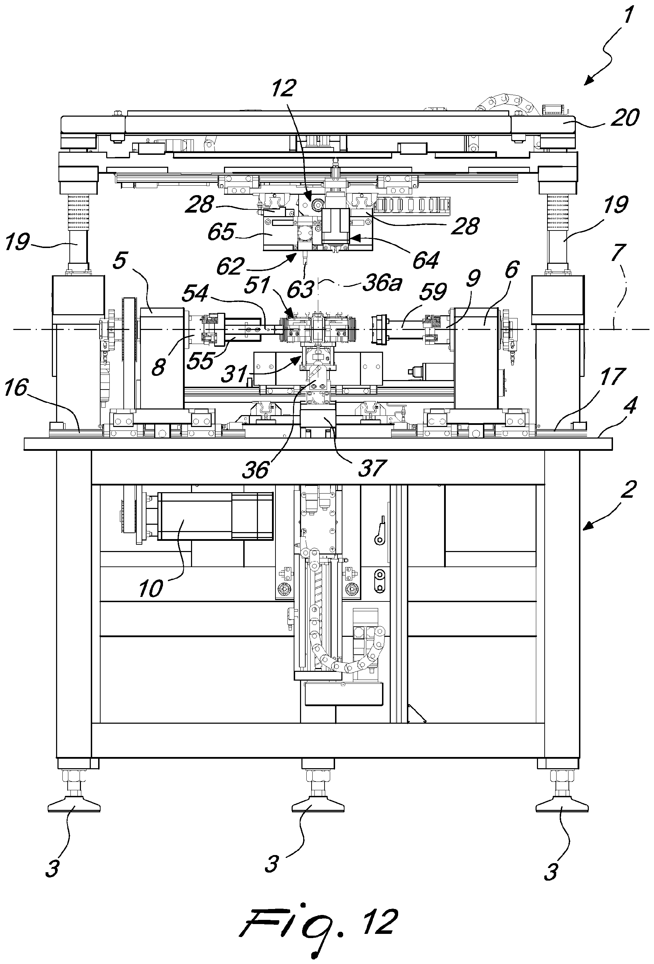

   Figure 12 is a partially sectional front elevation view of the machine with the first apparatus during the mounting step;

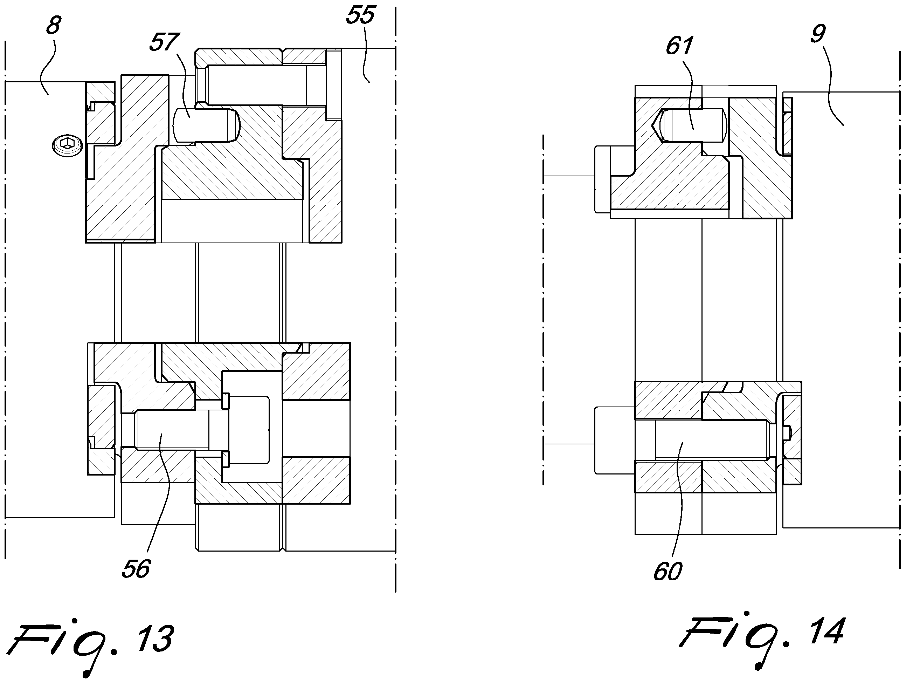

   Figure 13 is an enlarged-scale view of a detail of Figure 12;
   Figure 14 is an enlarged-scale view of another detail of Figure 12;

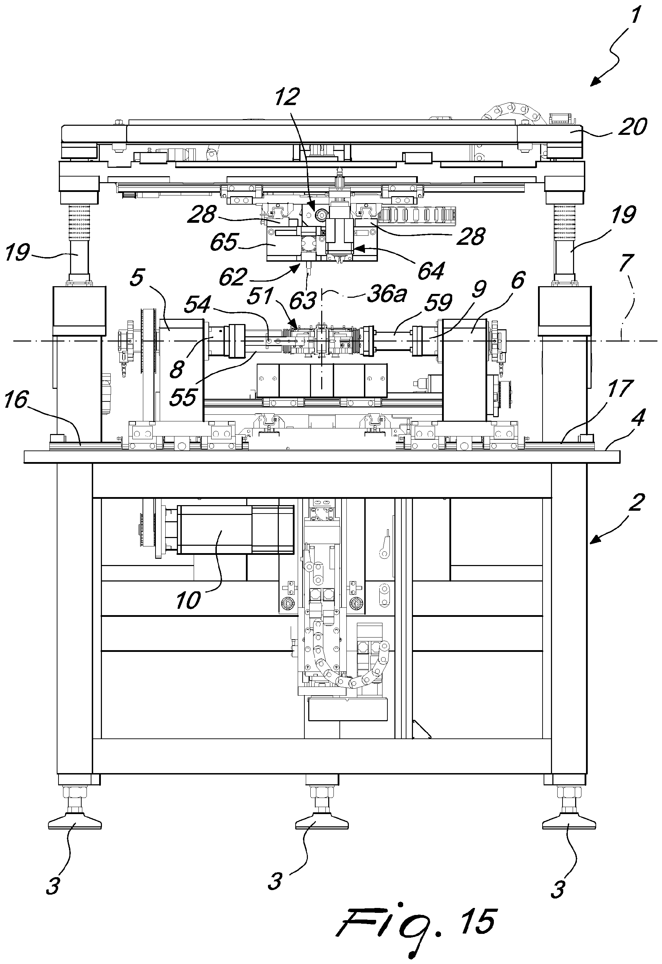

   Figure 15 is a front elevation view of the machine with the first apparatus installed and ready for use;

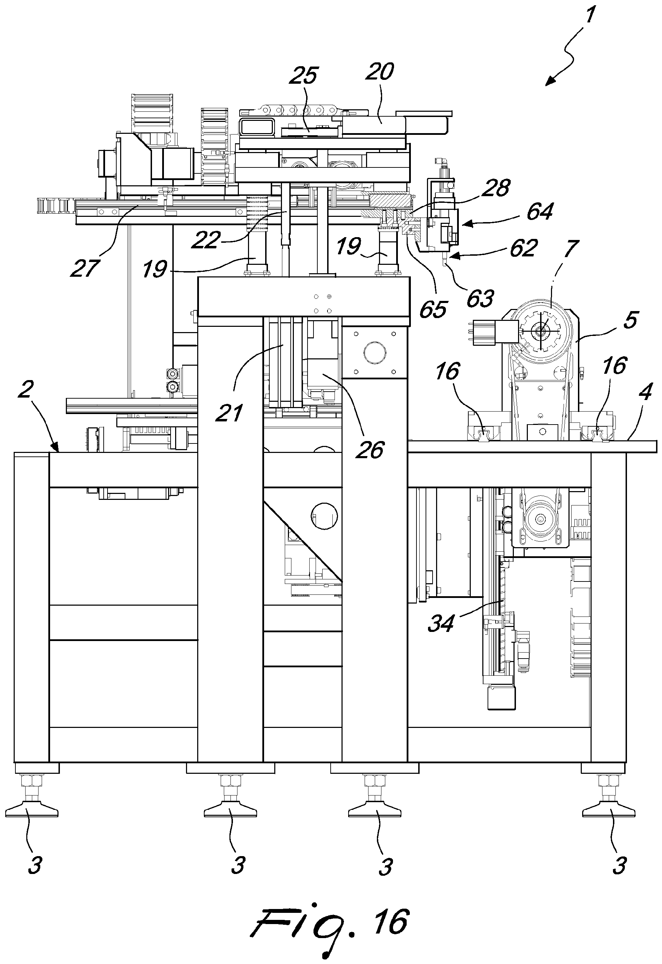

   Figure 16 is a partially sectional side elevation view of the machine;

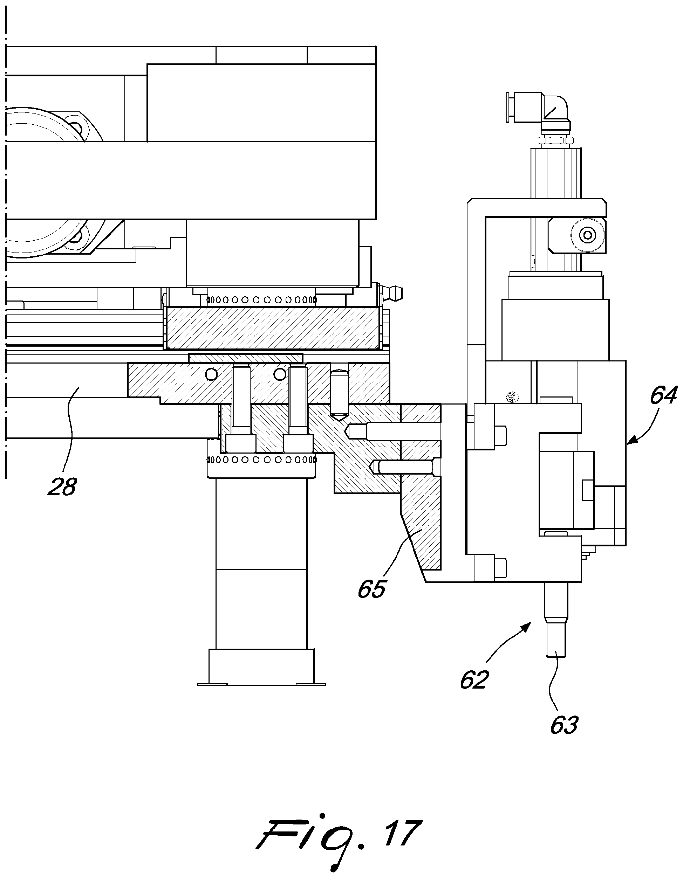

   Figure 17 is an enlarged-scale view of a detail of Figure 16;

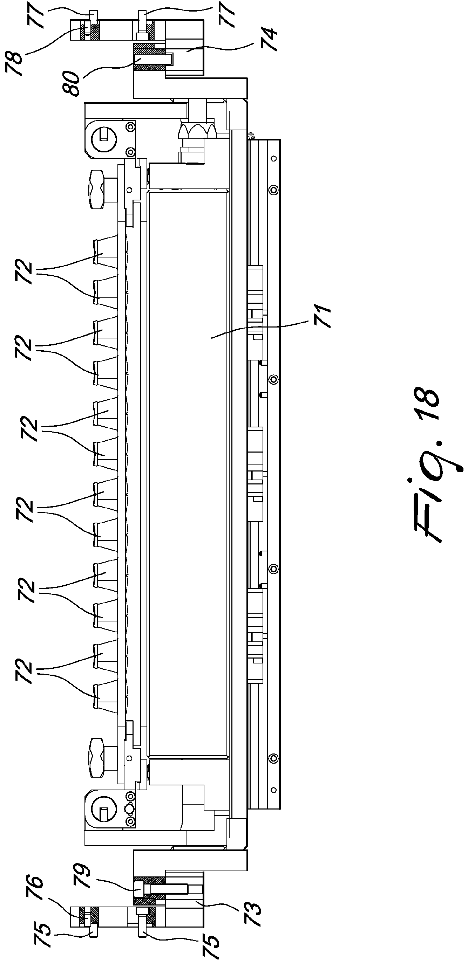

Figures 18 to 24 are views of a second apparatus that can be mounted on the basic version of the machine for producing a second type of winding, more particularly:
   Figure 18 is a partially sectional front elevation view of a first component of the second apparatus;

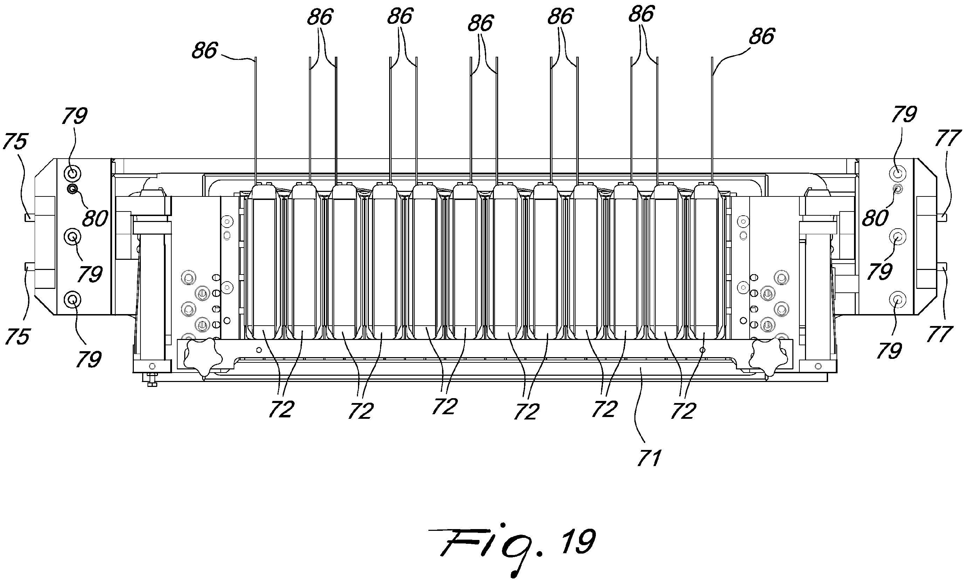

   Figure 19 is a top plan view of the same component of Figure 18;

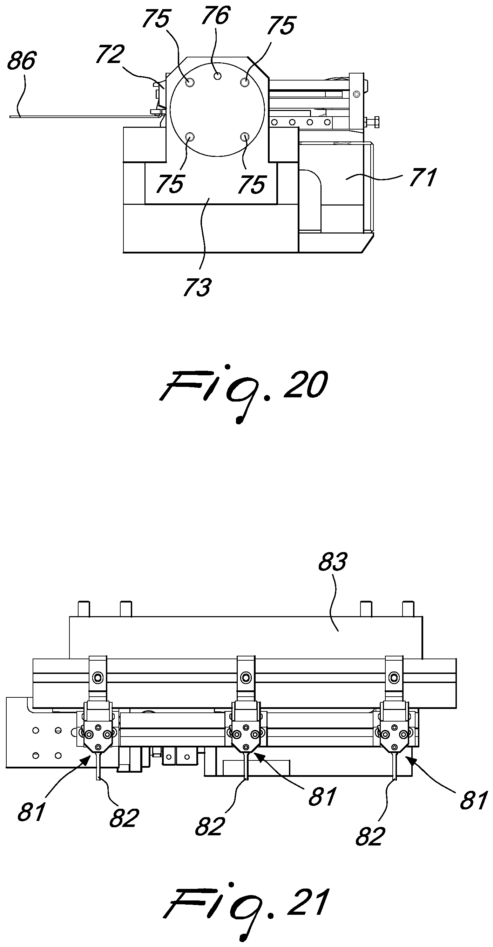

   Figure 20 is a side elevation view of the same component of Figures 18 and 19;
   Figure 21 is a front elevation view of a second component of the second apparatus;

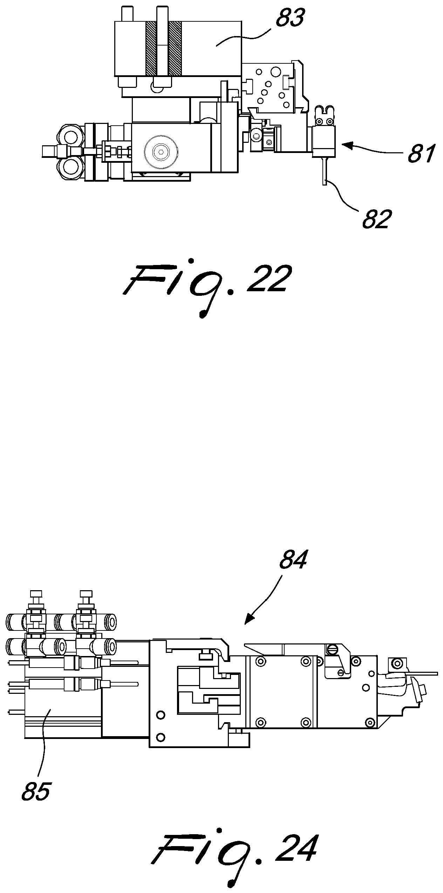

   Figure 22 is a partially sectional front elevation view of the same component of Figure 21;

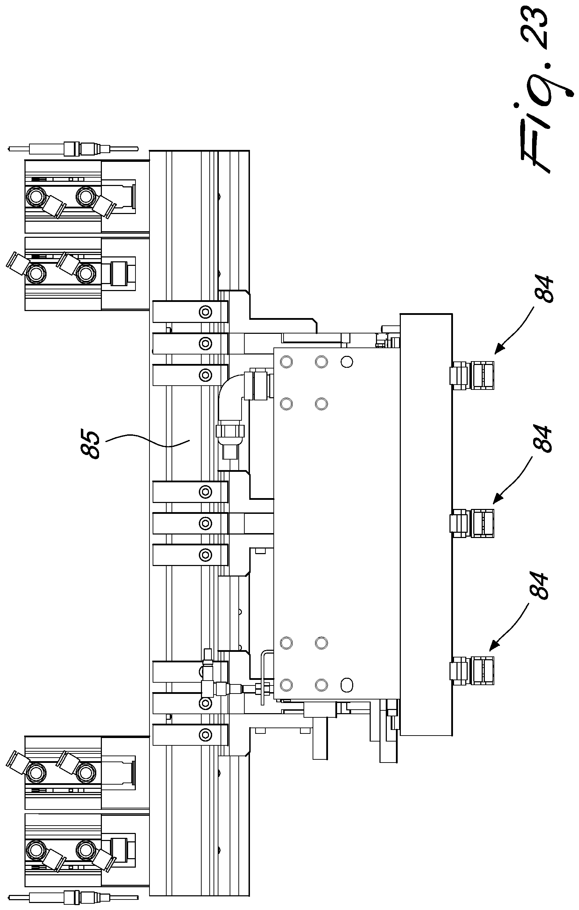

   Figure 23 is a top plan view of a third component of the second apparatus;
   Figure 24 is a side elevation view of the same component of Figure 23;

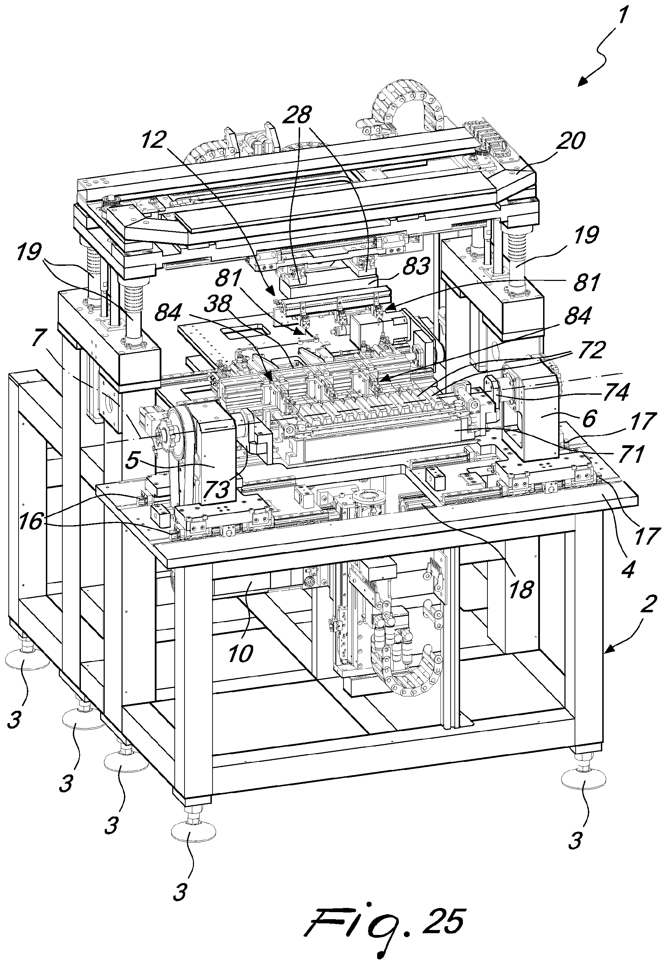

Figures 25 to 27 are views of the machine according to the invention equipped with the second apparatus, more particularly:
   Figure 25 is a perspective view of the machine with the second apparatus mounted and ready for use;

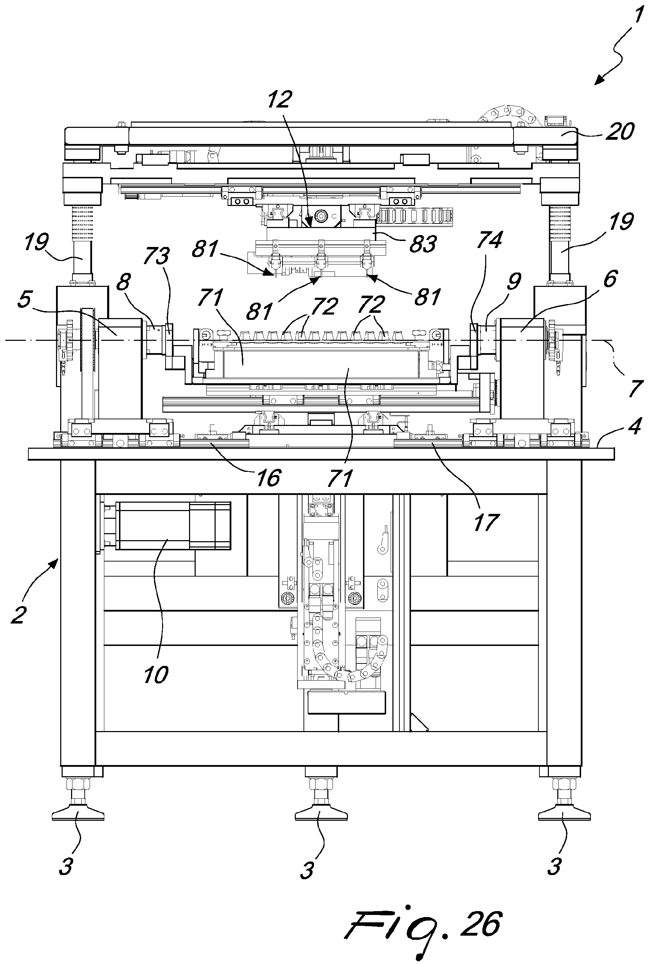

   Figure 26 is a front elevation view of the machine;

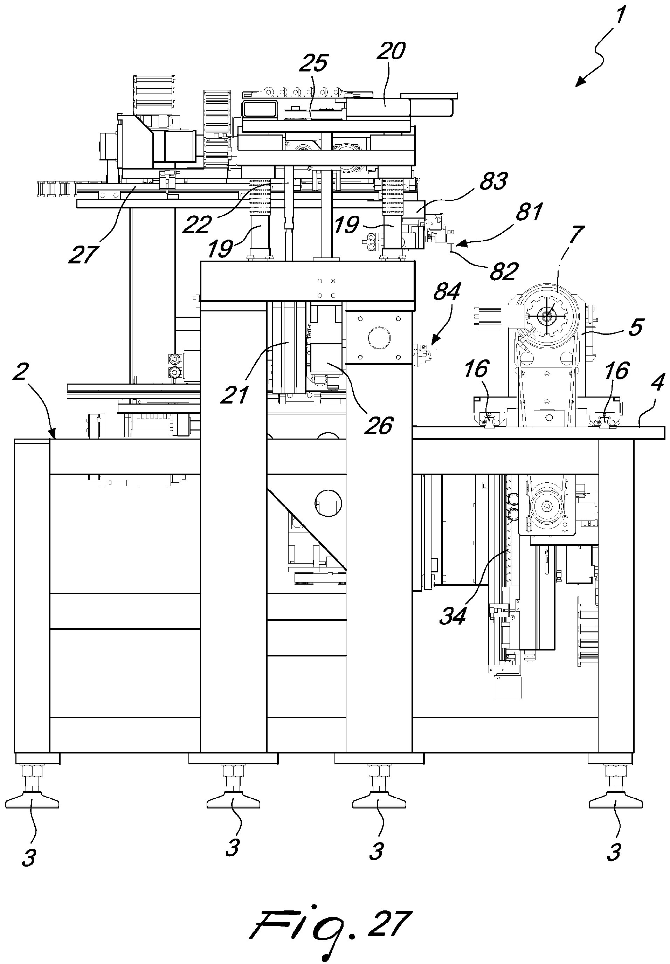

   Figure 27 is a side elevation view of the machine;

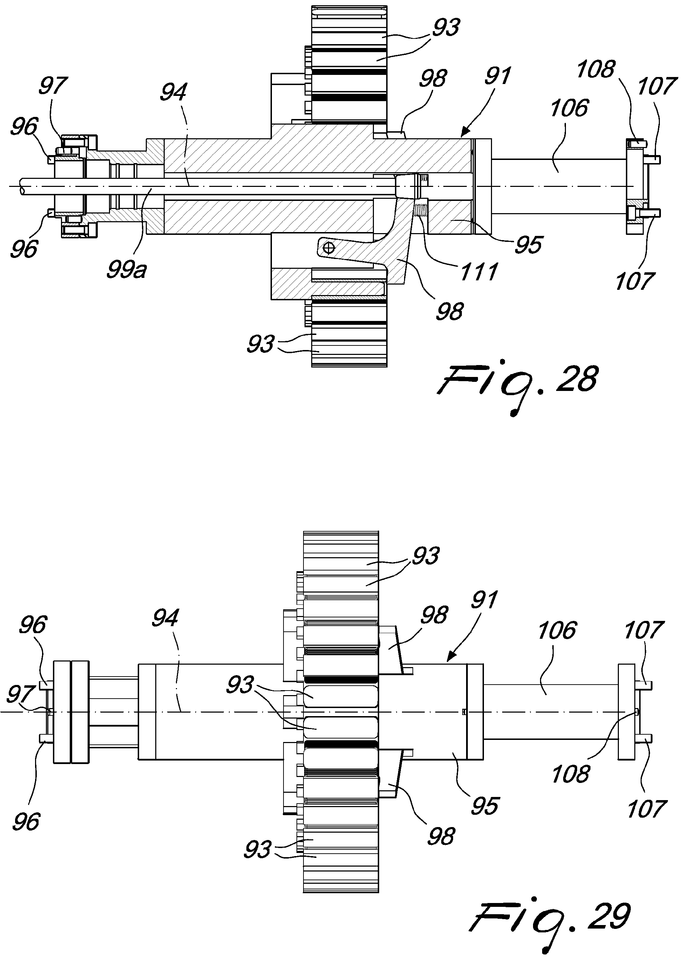

Figures 28 to 35 are views of a third apparatus that can be mounted on the basic version of the machine for the production of a third type of winding, more particularly:
   Figure 28 is a partially sectional front elevation view of a first component of the third apparatus;
   Figure 29 is a top plan view of the same component of Figure 28;

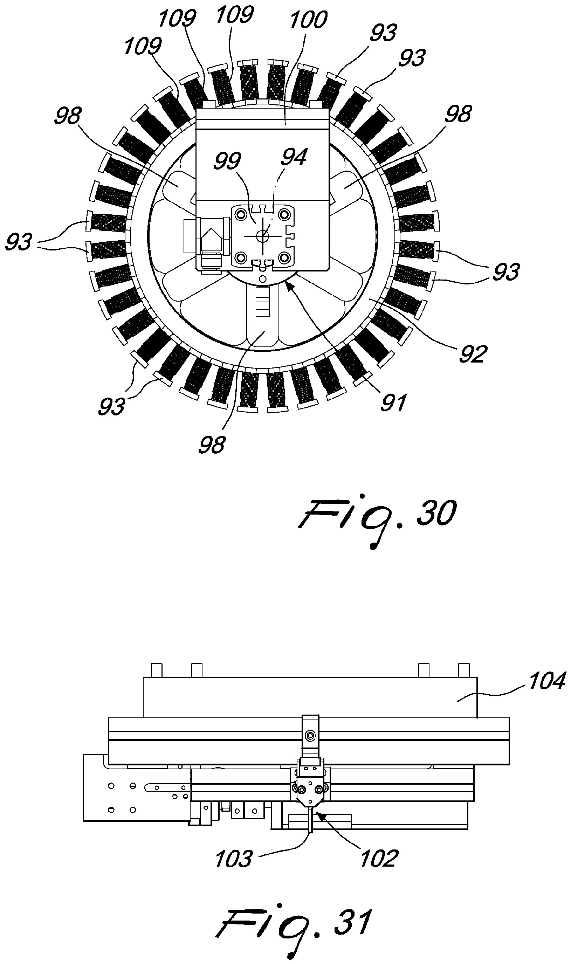

   Figure 30 is a side elevation view of the same component of Figures 28 and 29;
   Figure 31 is a front elevation view of a second component of the third apparatus;

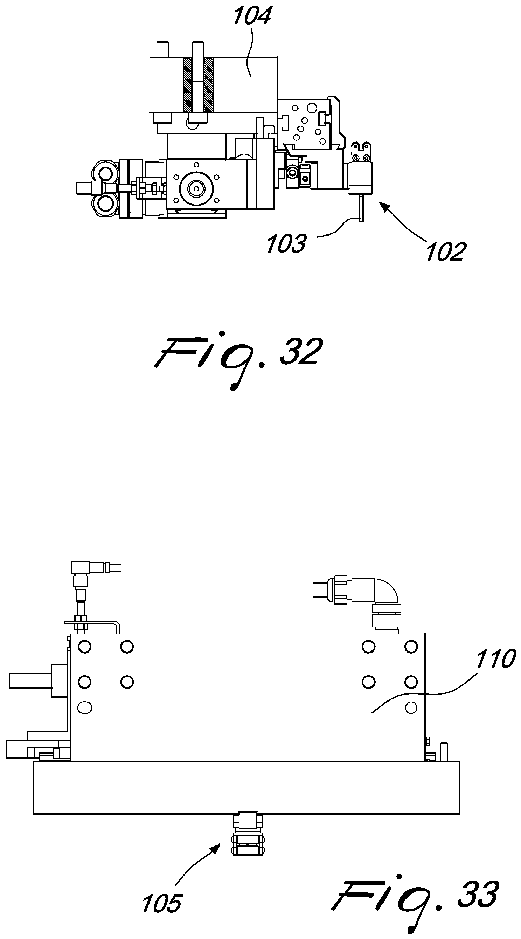

   Figure 32 is a partially sectional side elevation view of the same component of Figure 31;
   Figure 33 is a top plan view of a third component of the third apparatus;

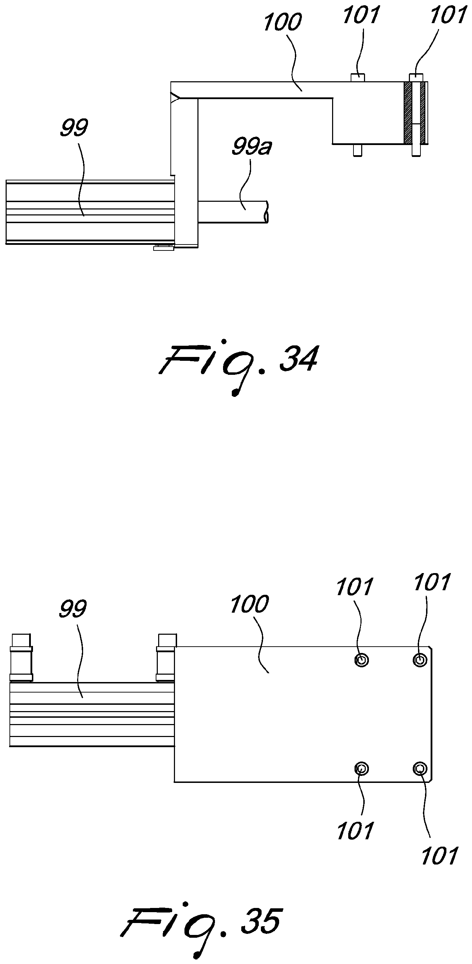

   Figure 34 is a partially sectional front elevation view of a fourth component of the third apparatus;
   Figure 35 is a top plan view of the same component of Figure 34;

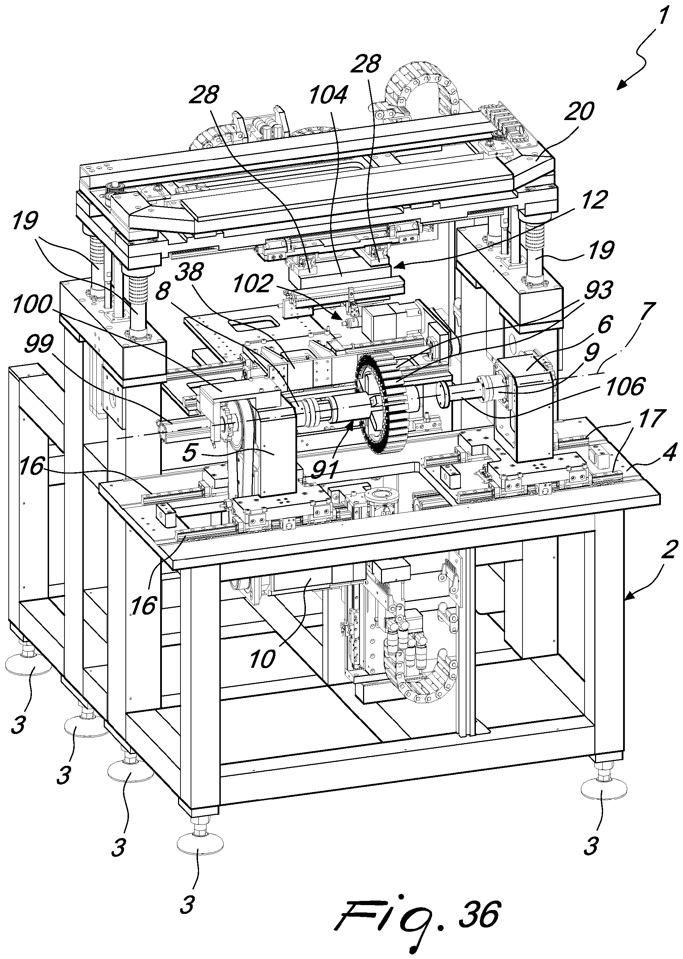

Figures 36 to 39 are views of the machine according to the invention equipped with the third apparatus, more particularly:
   Figure 36 is a perspective view of the machine with the third apparatus during the mounting step;

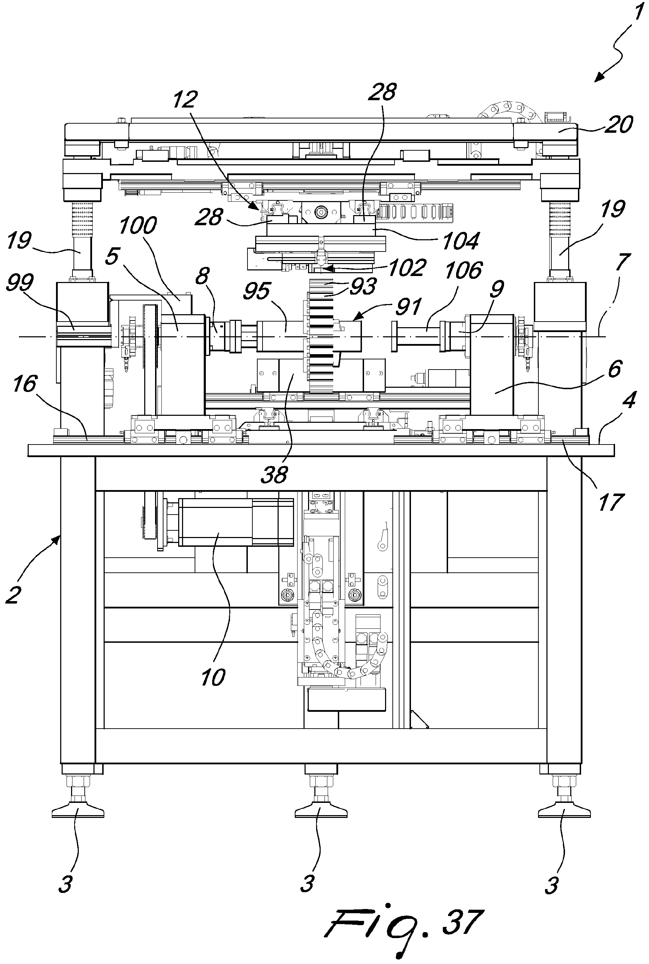

   Figure 37 is a front elevation view of the machine with the third apparatus during the mounting step;

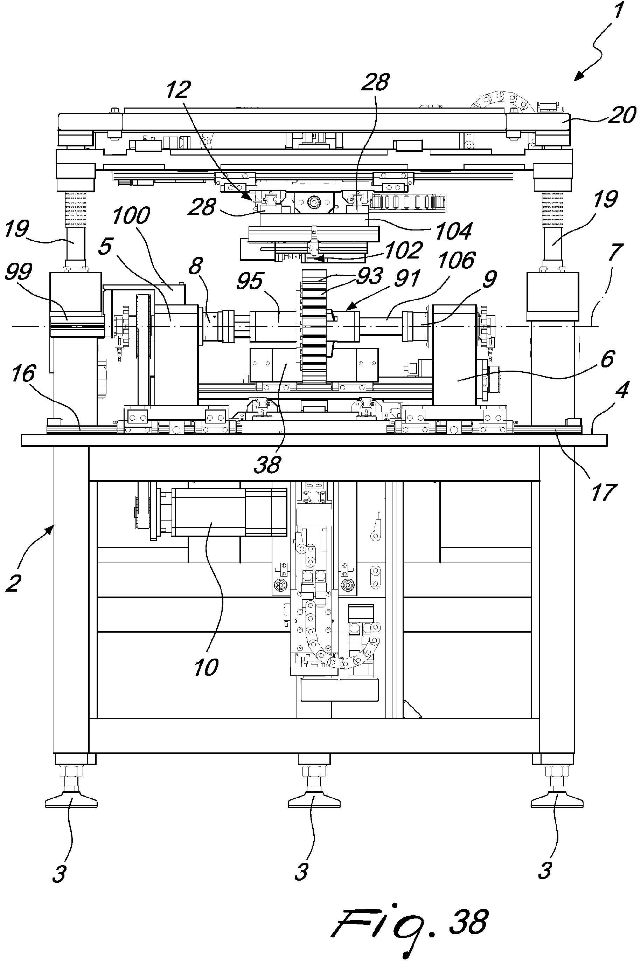

   Figure 38 is a front elevation view of the machine with the third apparatus ready to use;

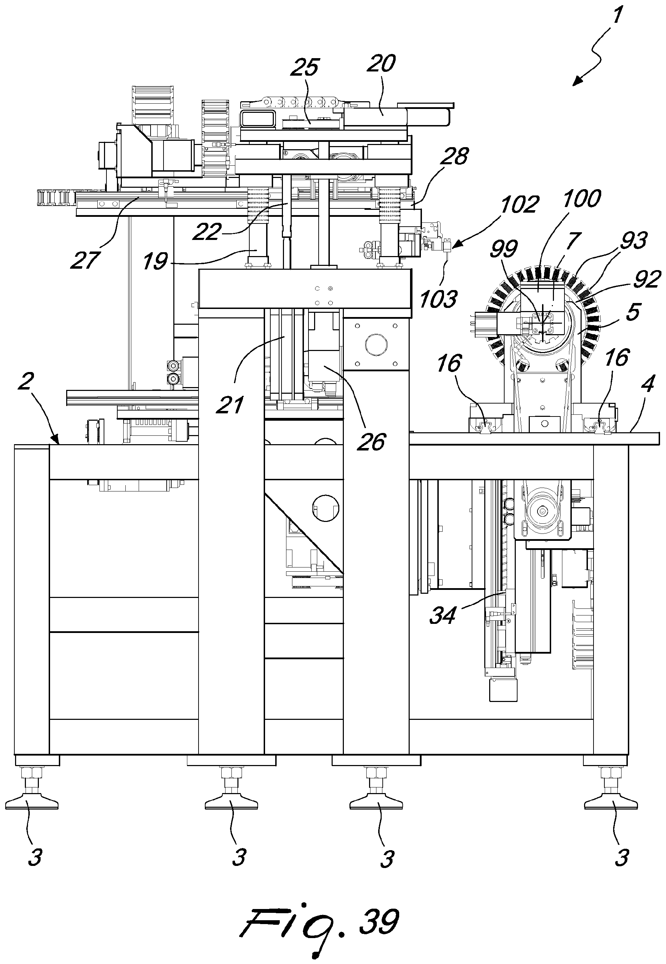

   Figure 39 is a side elevation view of the machine;

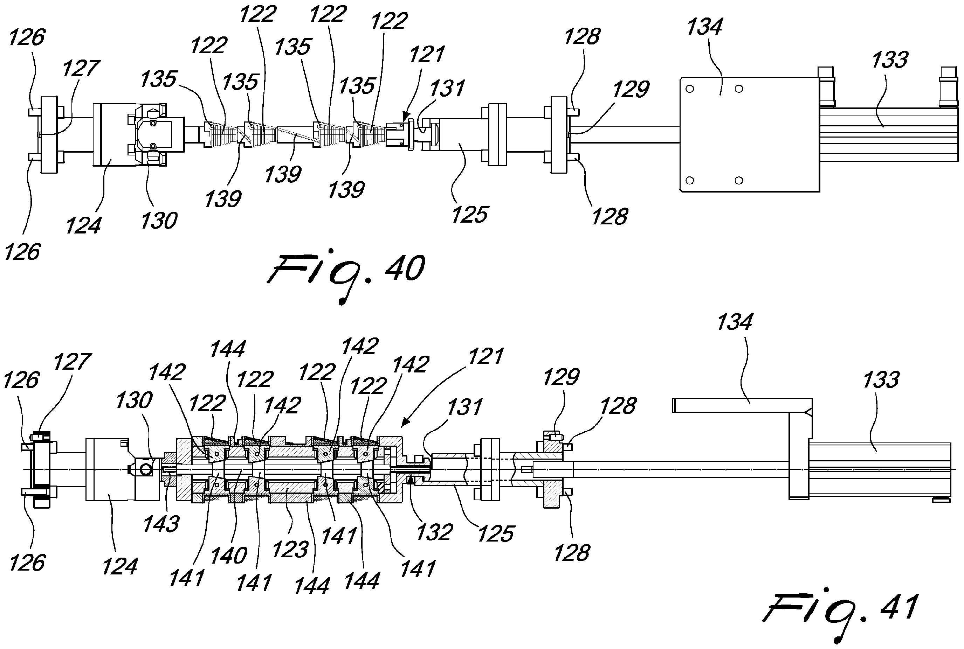

Figures 40 to 44 are views of a fourth apparatus that can be mounted on the basic version of the machine for the production of a fourth type of winding, more particularly:
   Figure 40 is a top plan view of a component of the fourth apparatus;
   Figure 41 is a partially sectional front elevation view of the same component of Figure 40;

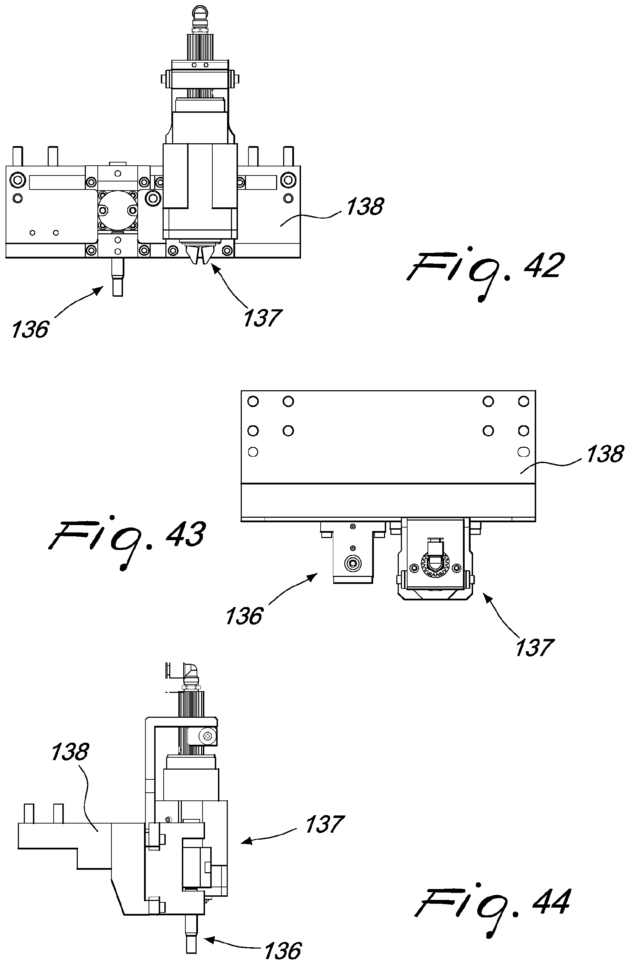

   Figure 42 is a front elevation view of a second component of the fourth apparatus;
   Figure 43 is a top plan view of the same component of Figure 42;
   Figure 44 is a side elevation view of the same component of Figures 42 and 43;

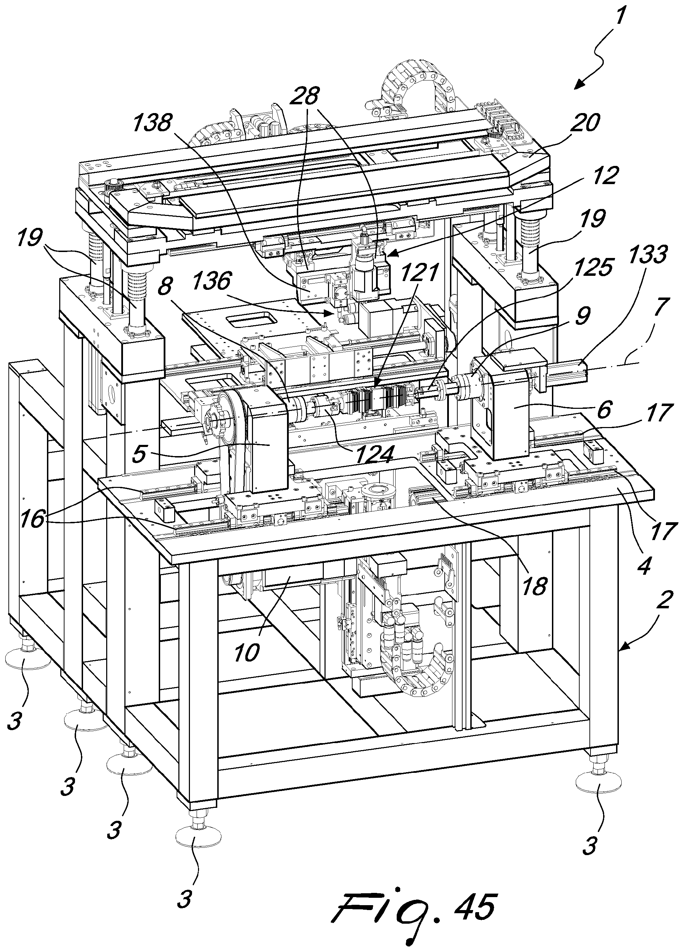

Figures 45 to 47 are views of the machine according to the invention equipped with the fourth apparatus, more particularly:
   Figure 45 is a perspective view of the machine;

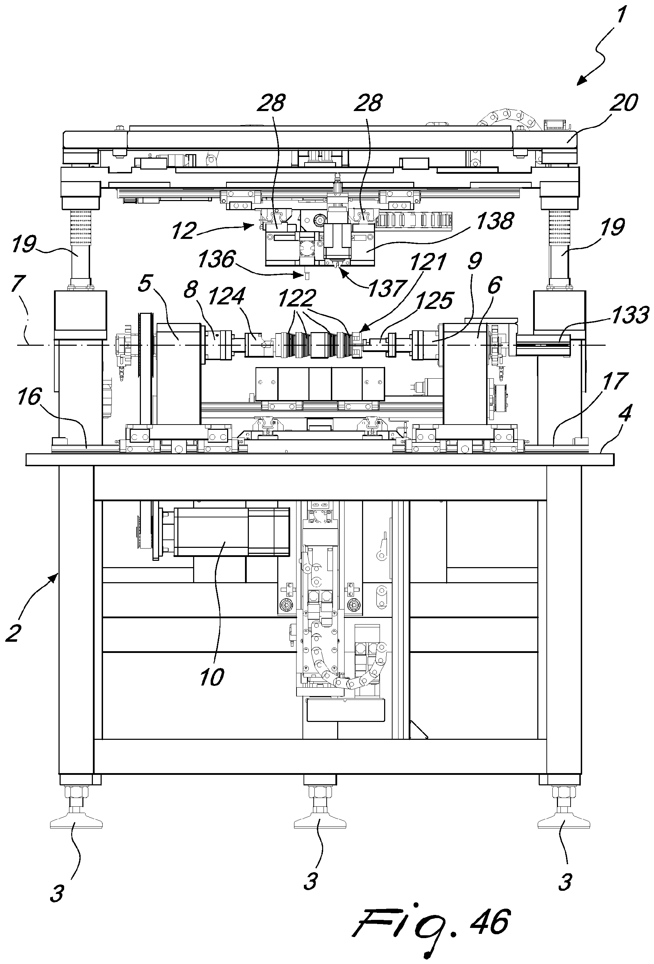

   Figure 46 is a front elevation view of the machine with the fourth apparatus ready for use;

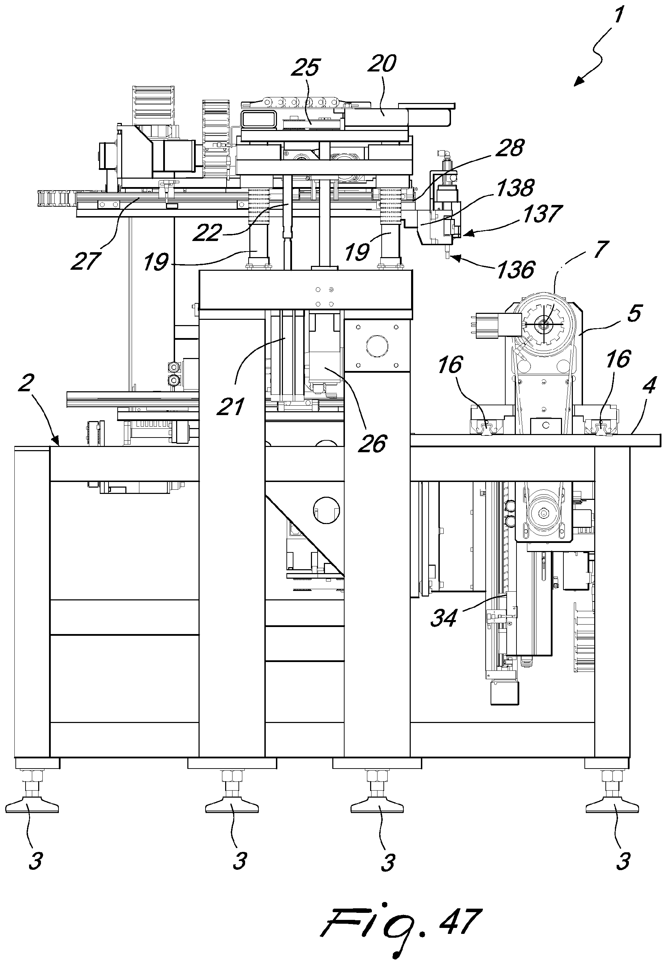

   Figure 47 is a side elevation view of the machine.

With reference to the figures, the machine according to the invention, generally designated by the reference numeral 1, comprises a main supporting structure 2 that is provided with ground resting feet 3 and defines a substantially horizontal working surface 4.

A first support 5 and a second support 6 are mounted on the main supporting structure 2.

The first support 5 in turn supports, so that it can rotate about its own axis 7, which is arranged horizontally, a spindle 8 which is arranged above the working surface 4 and can be actuated with a rotary motion about its own axis 7.

The second support 6 in turn supports, so that it can rotate about its own axis, a tailstock 9 that faces coaxially the spindle 8 above the working surface 4.

An electric motor 10 is connected to the first support, is arranged below the working surface 4 and is connected, by means of a toothed belt transmission 11, to the spindle 8.

According to the invention, the main supporting structure 2 supports also a third support 12 that can move on command along three mutually perpendicular axes 13, 14, 15, respectively along two horizontal axes 13, 14 and along a vertical axis 15; moreover, at least one between the first support 5 and the second support 6 can move with respect to the other one along a direction that is parallel to the axis 7 of the spindle 8 and of the tailstock 9 and the third support 12 is provided with detachable engagement means for components of apparatuses for dispensing and/or cutting wires to be wound around rotor or stator cores that can be mounted between the spindle 8 and the tailstock 9, as better described hereinafter.

More particularly, the first support 5 is mounted, so as it can slide, on a pair of horizontal sliding guides 16, which are fixed to the working surface 4 and are oriented parallel to the axis 7 of the spindle 8 and of the tailstock 9. The first support 5 can slide manually along the sliding guides 16 and can be locked along the sliding guides 16 in a per se known manner.

Optionally, the first support 5 can be moved along the sliding guides 16 in an automated manner, for example by means of a fluid-operated cylinder, not shown, instead of manually.

The second support 6 also is mounted, so that it can slide, on a pair of horizontal sliding guides 17, which are fixed to the working surface 4 and are oriented parallel to the axis 7 of the spindle 8 and of the tailstock 9.

The second support 6 is connected to the stem of the piston of a fluid-operated cylinder 18 that is fixed, by means of its body, to the main supporting structure 2 and is oriented with its axis parallel to the axis 7 of the spindle 8 and of the tailstock 9. The fluid-operated cylinder 18 can be actuated in order to cause the movement of the second support 6 along the corresponding sliding guides 17.

The main supporting structure 2 is provided with vertical columns 19 that slidingly support a first framework 20, which is extended horizontally and can be moved on command, in a controlled manner, along the vertical columns 19 by way of the action of a pair of electric motors 21, which are supported by the main supporting structure 2 and are connected, by means of a screw-and-nut recirculating ball transmission 22, to the first framework 20.

The first framework 20 supports, by means of horizontal sliding guides 23 oriented parallel to the axis 7 of the spindle 8 and of the tailstock 9, a second framework 24, which is extended horizontally and is connected, by means of a toothed belt 25, to a pair of electric motors 26, which are supported by the first framework 20 and can be actuated in order to cause the controlled movement of the second framework 24 along the sliding guides 23 with respect to the first framework 20.

The second framework 24 has sliding seats in which horizontal sliding guides 27 are coupled which are oriented at right angles to the axis 7 of the spindle 8 and of the tailstock 9 and are fixed to a third framework 28, which is extended horizontally and is connected, by means of a screw-and-nut recirculating ball transmission 29, to an electric motor 30 which is supported by the second framework 24 and can be actuated in order to cause the controlled movement of the third framework 28 and of the sliding guides 27 relatively along the corresponding sliding seats of the second framework 24.

The third support 12 is connected to the third framework and, by way of the actuation of the motors 21, 26 and 30, can be moved, precisely and in a controlled manner, along three mutually perpendicular axes 13, 14, 15, respectively two horizontal axes 13, 14 and one vertical axis 15.

Advantageously, the machine according to the invention comprises a fourth support 31, which is supported by the main supporting structure 2 between the spindle 8 and the tailstock 9. The fourth support 31 is mounted on a fourth framework 32, which is supported, so that it can slide, along vertical sliding guides 33 that are fixed to the main supporting structure 2. The fourth framework 32 is connected, by means of a screw-and-nut recirculating ball transmission 34, to an electric motor 35 that is supported by the main supporting structure 2. The fourth support 31 is fixed to the upper end of a shaft 36, which has a vertical axis 36a and is supported, so that it can rotate about its own axis 36a, by the fourth framework 32. The shaft 36 is connected to an electric motor 37 mounted on the fourth framework 32. By means of the actuation of the motors 35 and 37, the fourth support 31 can be moved vertically and rotated around the axis 36a with respect to the main supporting structure 2, in a precise and controlled manner.

The machine according to the invention comprises also a supporting plate 38, which can be fixed or, as illustrated, can be movable, manually or in an automated manner, along at least two mutually perpendicular axes. More particularly, the supporting plate 38 is fixed on a fifth framework 39, which can slide along a pair of horizontal sliding guides 40, which are oriented parallel to the axis 7 of the spindle 8 and of the tailstock 9 and are fixed to the upper face of a sixth framework 41, which is fixed in turn, with its lower face, to a pair of sliding guides 42 that are oriented at right angles to the axis 7 of the spindle 8 and of the tailstock 9 and are coupled within sliding seats fixed to the main supporting structure 2.

The machine according to the invention can be provided with one or more apparatuses that can be used in order to produce different types of windings.

Figures 5 to 47 show four apparatuses and their use for producing four types of windings.

For greater clarity, these figures also show the cores and the corresponding windings of the rotor or stator poles already produced, i.e., in the situation at the end of the production of the windings, even though obviously the windings are produced after the mounting of the corresponding apparatus on the machine.

The first apparatus, shown in Figures 5 to 10, allows to produce the winding of rotor or stator cores 53 arranged so their axes lie on a plane that passes through the axis 7 of the spindle 8 and of the tailstock 9 and are arranged radially and so as to be angularly mutually spaced around an axis 52 that is perpendicular to the axis 7 of the spindle 8 and of the tailstock 9.

More particularly, the first apparatus comprises a core supporting platform 51, which is substantially flat and has a polygonal plan shape, which is extended around an axis 52 and can support rotor or stator cores 53 that can be associated with the core supporting platform 51 at perimetric sides thereof so that the axes of the rotor or stator cores 53 are oriented radially with respect to the axis 52 of the core supporting platform 51 and are mutually angularly spaced around the axis 52. In the illustrated embodiment there are four rotor or stator cores 53 that are mutually angularly spaced around the axis 52 according to 90° angles with respect to each other, but the number of rotor or stator cores 53 that the core supporting platform 51 can support may vary according to the requirements and the shape of the core supporting platform 51.

The core supporting platform 51 can be engaged by a pair of arms 54 that extend, on mutually opposite sides, from a connecting element 55 that can be fixed, for example by means of screws 56 and one or more centering pivots 57, to the side of the spindle 8 that is directed toward the tailstock 9. The arms 54 are coupled by means of one of their ends to seats 58 that are defined on the side walls of the core supporting platform 51 in the regions that are not occupied by the rotor or stator cores 53. The ends of the arms 54 and the seats 58 with which they can engage are provided so as to allow the core supporting platform 51, which is arranged horizontally, to disengage from the arms 54 following a lowering of the core supporting platform 51 with respect to the arms 54 and allow the engagement of the core supporting platform 51 with the arms 54 by means of a movement in the opposite direction.

On the opposite side with respect to the connecting element 55 there is another connecting element 59, which can be fixed, for example by means of screws 60 and one or more centering pivots 61, to the tailstock 9. This connecting element 59 can be engaged, in each instance, with a rotor or stator core 53 that faces it cyclically.

The core supporting platform 51 can be locked between the spindle 8 and the tailstock 9 by moving the tailstock 9 toward the spindle 8, which can be actuated by means of the actuation of the fluid-operated cylinder 18.

The core supporting platform 51, moreover, can engage with one of its faces the fourth support 31 arranged between the spindle 8 and the tailstock 9.

The first apparatus comprises also a device 62 for dispensing the wire 67, constituted for example by a wire guiding tube 63 of the fixed type, and a device 64 for cutting the wire 67, for example with fluid-operated actuation, which are mounted on a corresponding supporting structure 65, which is intended to be fixed to the third support 12. Both the device 62 for dispensing the wire 67 and the device 64 for cutting the wire 67 are components of the known type that are used in winding machines of the known type and therefore are not described in detail for the sake of simplicity.

With reference to Figures 11 to 17, use of the machine with the first apparatus is as follows.

The connecting elements 55 and 59 are associated respectively with the spindle 8 and with the tailstock 9. The core supporting platform 51, with the rotor or stator cores 53 to be wound with the wire 67 mounted thereon, is locked between the arms 54 and the connecting element 59 with a pair of rotor or stator cores 53, which are aligned axially with the spindle 8 and the tailstock 9. The supporting structure 65 that supports the device 62 for dispensing the wire 67 and the device 64 for cutting the wire 67 are fixed to the third support 12.

The device 62 for dispensing the wire 67 is moved closer, by using the possibility of movement along the three axes 13, 14 and 15 of the third support 12, to the rotor or stator core 53 engaged with the connecting element 59 that is fixed to the tailstock 9 and dispensing of the wire 67 begins so that the initial end thereof engages one of the engagement points 66 provided on the core supporting platform 51 proximate to the rotor or stator cores 53. The spindle 8 is actuated with a rotary motion about its own axis 7 so as to cause the rotation of the core supporting platform 51 about the axis 7 of the spindle 8 and of the tailstock 9 and therefore so as to actuate the progressive winding of the wire 67 around the rotor or stator core 53 engaged by the connecting element 59 fixed to the tailstock 9, while the device 62 for dispensing the wire 67 is moved parallel to the axis 7 of the spindle 8 and of the tailstock 9 in order to produce the layering of the wire 67 during its winding around the rotor or stator core 53.

Once the winding of a rotor or stator core 53 has ended, with the core supporting platform 51 in a horizontal position and with its axis 52 coinciding with the axis 36a, the fourth support 31 is raised so as to engage the lower side of the core supporting platform 51. The connecting element 59 fixed to the tailstock 9 is disengaged, by moving the second support 6 along the sliding guides 17, from the rotor or stator core 53 that has just been wound and the fourth support 31 is lowered so as to move the core supporting platform 51 below the arms 54. Then the fourth support 31 is rotated about its own axis 36a through an angle of preset breadth, which in the illustrated example is 90°, so as to arrange another pair of rotor or stator cores 53 along an axis that is parallel to the axis 7 of the spindle 8 and of the tailstock 9. The fourth support 31 is then raised to engage again the core supporting platform 51 with the arms 54, thus moving the other pair of rotor or stator cores 53 into axial alignment with the spindle 8 and the tailstock 9. The second support 6 is then moved again closer to the first support 5 so that the connecting element 59 engages the rotor or stator core 53 that faces it. The fourth support 31 is disengaged and moved downward away from the core supporting platform 51. The core supporting platform 51 is therefore again locked between the spindle 8 and the tailstock 9. The device 62 for dispensing the wire 67 is actuated again, in the same manner already described, while the spindle 8 is again actuated with a rotary motion about its own axis 7 so as to cause the rotation of the core supporting platform 51 and therefore of the rotor or stator cores 53 that are axially aligned with the spindle 8 and the tailstock 9 in order to actuate the winding of the rotor or stator core 53 with which the connecting element 59 fixed to the tailstock 9 is engaged.

Operation continues as already described until winding of all the rotor or stator cores 53 arranged on the core supporting platform 51 is completed. The device 64 for cutting the wire 67 is then moved proximate to the last rotor or stator core 53 that was wound and is actuated in order to cut the wire 67.

The connecting element 59 fixed to the tailstock 9 is then disengaged and moved away from the last rotor or stator core 53 that was wound so as to allow removal of the core supporting platform 51 and its replacement with a new core supporting platform with other rotor or stator cores to be wound mounted thereon.

The second apparatus, shown in Figures 18 to 24, allows to wind rotor or stator cores 72 that are arranged mutually side by side parallel to the axis 7 of the spindle 8 and of the tailstock 9.

More particularly, the second apparatus comprises a core supporting element 71, which is substantially bar-shaped and is adapted to support a plurality of rotor or stator cores 72 arranged mutually side by side and in cradles defined in the core supporting element 71.

The second apparatus comprises two connecting elements 73, 74, which can be fixed, for example by means of screws 75, 77 and centering pivots 76, 78, respectively to the spindle 8 and to the tailstock 9. In turn, the core supporting element 71 can be fixed detachably to the connecting elements 73, 74 by means of screws 79 and centering pivots 80.

The second apparatus comprises also at least one oscillating device 81 for dispensing the wire 86 to be wound around the rotor or stator cores 72, and the oscillating device 81 for dispensing the wire 86 can be associated detachably with the third support 12.

The oscillating device 81 for dispensing the wire 86 can be constituted by an oscillating tube 82 of a known type, usually used on winding machines that wind rotor or stator cores in static position by moving exclusively the wire dispensing device.

In the illustrated embodiment, the second apparatus is equipped with three oscillating tubes 82, but the number of oscillating tubes, in order to minimize the time required for winding, may be equal to the number of the rotor or stator cores 72 carried by the core supporting element 71.

The oscillating devices 81 for dispensing the wire 86 are fixed to a corresponding supporting structure 83, which is designed to be fixed to the third support 12.

The second apparatus comprises also at least one device 84 for cutting the wire 86 that can be associated detachably with the main supporting structure 2, more particularly to the supporting plate 38. The device 84 for cutting the wire 86 can be constituted by a pneumatically actuated cutting device 84 of a known type, which is capable of moving forward in order to engage with a winding wire 86 and cut it.

In the illustrated embodiment there are three cutting devices 84, which are mounted on a corresponding supporting structure 85, which in turn is designed to be fixed to the supporting plate 38. Preferably, again in order to minimize the time required to perform the winding of all of the rotor or stator cores 72 carried by the core supporting element 71, there are as many cutting devices 84 as there are rotor or stator cores 72 carried by the core supporting element 71.

With reference to Figures 25 to 27, use of the machine with the second apparatus is as follows.

The connecting elements 73, 74 are fixed in advance respectively to the spindle 8 and to the tailstock 9, and the supporting structure 83, which carries the oscillating devices 81 for dispensing the wire 86, is fixed to the third support 12, and the supporting structure 85, which carries the devices 84 for cutting the wire 86, is fixed to the supporting plate 38.

The core supporting element 71 is then fixed, by means of the screws 79, to the connecting elements 73, 74.

With the machine thus equipped, by utilizing the possibility of movement along the three axes 13, 14, 15 of the third support 12, the oscillating devices 81 for dispensing the wire 86 are brought proximate to the rotor or stator cores 72 and are actuated so as to dispense the wire 86, which, again by utilizing the possibility of movement along the three axes 13, 14, 15 of the third support 12, is wound around the corresponding rotor or stator core 72.

Once the winding of the rotor or stator cores 72 has been completed, the wire 86 is cut by the cutting devices 84.

It should be noted that if as many oscillating devices 81 for dispensing the wire 86 as there are rotor or stator cores 74 to be wound are used, the rotor or stator cores 72 may be all wound simultaneously, while instead when using a single dispensing oscillating device 81 or a number of dispensing oscillating devices 81 that is a submultiple of the number of rotor or stator cores 72 to be wound carried by the core supporting element 71 the winding might be produced in succession by actuating, in each instance, the transition of the oscillating device 81 for dispensing the wire 86 or of the oscillating devices 81 for dispensing the wire 86 from one core 72 to another.

Once the winding of all the rotor or stator cores 72 carried by the core supporting element 71 has been completed, the core supporting element 71 is disengaged from the connecting elements 73, 74 by removing the screws 79 and is replaced with another core supporting element that supports new cores to be wound.

The third apparatus, shown in Figures 28 to 35, allows to wind rotor or stator cores 93 arranged with their axes on a plane that is perpendicular to the axis 7 of the spindle 8 and of the tailstock 9 and arranged radially and so as to be angularly mutually spaced around the axis 7 of the spindle 8 and of the tailstock 9.

More particularly, the third apparatus comprises a supporting and locking element 91, of the detachable type, of a core supporting ring 92 that supports a plurality of rotor or stator cores 93 that are arranged so that their axes are mutually spaced radially and angularly around the axis 94 of the core supporting ring 92.

The supporting and locking element 91 comprises a shaft 95, which is hollow internally and is designed to be fixed coaxially to the spindle 8, for example by means of screws 96 and centering pivots 97. The hollow shaft 95 carries arms 98 that are pivoted with one of their intermediate portions to the hollow shaft 95 and are extended radially with respect to the hollow shaft 95. The arms 98 can be expanded radially because they can rotate about the corresponding pivoting axis to the hollow shaft 95 so as to engage or disengage, by means of one of their ends, the inner lateral surface of the core supporting ring 92 when it is arranged coaxially around the hollow shaft 95. The rotation of the arms 98 in order to actuate their engagement or disengagement with respect to the core supporting ring 92 is actuated by means of the stem 99a of the piston of a fluid-operated cylinder 99 that is inserted coaxially inside the hollow shaft 95 and is actuated so as to engage and disengage the end of the arms 98 arranged inside the hollow shaft 95 in order to cause the engagement of the opposite end of the arms 98 with the inner lateral surface of the core supporting ring 92 or the disengagement of the opposite end of the arms 98 from the inner lateral surface of the core supporting ring 92. The fluid-operated cylinder 99, as shown in Figures 34 and 35, is fixed to a supporting element 100, which is provided with screws 101 by means of which the supporting element 100 can be fixed to the first support 5. The stem 99a of the fluid-operated cylinder 99 passes through an axial passage that is conveniently defined in the spindle 8, is inserted in the hollow shaft 95 and engages or disengages the ends of the arms 98 arranged inside the hollow shaft 95.

The rotation of the arms 98 about the corresponding axes for pivoting to the hollow shaft 95 in the direction that causes the locking of the core supporting ring 92 is contrasted by springs 111.

The third apparatus comprises also an oscillating device 102 for dispensing the wire 109 to be wound around the rotor or stator cores 93, which can be associated detachably with the third support 12.

The oscillating device 102 for dispensing the wire 109 can be constituted by an oscillating tube 103 of a known type, for example of the same type already described with reference to the second apparatus. The oscillating tube 103 is fixed to a corresponding supporting structure 104, which in turn is designed to be fixed to the third support 12.

The third apparatus comprises, moreover, a device 105 for cutting the wire 109 that is mounted on a corresponding supporting structure 110, which can be associated detachably with the main supporting structure 2, more particularly with the supporting plate 38. The device 105 for cutting the wire 109 can be constituted by a pneumatically-actuated cutting device of a known type, which is capable of moving forward in order to engage a winding wire and cut it, for example of the type already described with reference to the second apparatus.

Finally, the third apparatus comprises also a supporting shaft 106 that is designed to be fixed, for example by means of screws 107 and centering pivots 108, to the tailstock 9 in a coaxial position with respect to the hollow shaft 95 when such shaft is fixed to the spindle 8.

With reference to Figures 36 to 39, use of the machine with the third apparatus is as follows.

In these figures, for the sake of simplicity, the representation of the device 105 for cutting the wire 109 has been omitted; as already noted, it is connected, by means of the corresponding supporting structure 110, to the supporting plate 38 in the same manner described and illustrated for the cutting devices 84 of the second apparatus.

The hollow shaft 95 is fixed to the spindle 8, the fluid-operated cylinder 99 is mounted, by means of the corresponding supporting element 100, on the first support 5 and the supporting shaft 106 is fixed coaxially to the tailstock 9 while the tailstock is conveniently spaced from the spindle 8 so that the supporting shaft 106 is spaced from the end of the hollow shaft 95 that it faces.

With the arms 98 in the disengagement position, i.e., in the position of maximum approach to the axis 94 of the hollow shaft 95, the core supporting ring 92 is mounted around the hollow shaft 95 and is locked by means of the actuation of the fluid-operated cylinder 99, which causes the rotation of the arms 98, engaging them with the inner lateral surface of the core supporting ring 92, which in this manner, is locked so that its axis 94 coincides with the axis 7 of the spindle 8 and of the tailstock 9.

At this point, the tailstock 9 is moved closer, by means of the actuation of the fluid-operated cylinder 18, to the spindle 8 until the supporting shaft 106 is brought against the end of the hollow shaft 95 that is opposite with respect to the spindle 8. At this point, by utilizing the possibility of movement along the three axes 13, 14, 15 of the third support 12, the oscillating device 102 for dispensing the wire 109 is actuated so as to wind one of the rotor or stator cores 93 carried by the core supporting ring 92. At the end of the winding of the rotor or stator core 93, by means of the rotation of the spindle 8 about its own axis 7, another rotor or stator core 93 is carried proximate to the oscillating device 102 for dispensing the wire 109 in a position suitable to be wound by the wire 109 dispensed by the oscillating dispensing device 102. These operations are repeated for each one of the rotor or stator cores 93 carried by the core supporting ring 92 until winding of all the rotor or stator cores 93 is completed.

Once the windings have been completed, the tailstock 9 is moved away form the spindle 8 so that the supporting shaft 106 disengages and moves away from the end of the hollow shaft 95 that is opposite with respect to the spindle 8. By actuating the fluid-operated cylinder 99, one causes the disengagement of the arms 98 from the inner lateral surface of the core supporting ring 92, which in this manner is released and can be removed to be replaced with another core supporting ring that carries another plurality of cores to be wound. The other core supporting ring is locked by the arms 98 by means of the actuation of the fluid-operated cylinder 99 and the cycle restarts as already described.

The fourth apparatus, shown in Figures 40 to 44, allows to wind rotor or stator cores 122 arranged coaxially to the spindle 8 and to the tailstock 9.

More particularly, the fourth apparatus comprises a core supporting element 121 that is adapted to support a plurality of rotor or stator cores 122 arranged coaxially to each other. The core supporting element 121 is composed substantially of a supporting shaft 123, on which the rotor or stator cores 122 are fitted and packed.

The fourth apparatus comprise two connecting elements 124, 125 that can be fixed respectively to the spindle 8 and to the tailstock 9, for example by means of screws 126, 128 and centering pivots 127, 129. The connecting elements 124, 125, at their opposite end with respect to the end connected to the spindle 8 or to the tailstock 9, have a cradle 130, 131 in which an axial end of the core supporting element 121 can be accommodated.

In this manner, the approach of the tailstock 9 to the spindle 8, i.e., of the second support 6 to the first support 5, when the fourth apparatus is mounted on the machine, obtains the axial locking of the core supporting element 121 and renders it integral with the spindle 8 and with the tailstock 9 in rotation about the axis 7.

The fourth apparatus also comprises members 132 for the radial locking of the rotor or stator cores 122 fitted on the supporting shaft 123 in order to render the rotor or stator cores 122 integral with the core supporting element 121 in rotation around its own axis, which, when the fourth apparatus is mounted on the machine, coincides with the axis 7. The radial locking members 132 comprise a pin 140 that is inserted coaxially in the supporting shaft 123, which is conveniently hollow, and has frustum-like portions 141 that engage with sectors 142, which can expand radially, are shaped correspondingly and can protrude from the lateral surface of the supporting shaft 123 and around which the rotor or stator cores 122 to be wound alternated with spacers 144 are fitted. Substantially, an axial movement of the pin 140 with respect to the supporting shaft 123, in one direction, causes the radial expansion of the sectors 142 and therefore the radial locking of the rotor or stator cores 122 with respect to the supporting shaft 123, while an axial movement of the pin 140 with respect to the supporting shaft 123 in the opposite direction allows the radial contraction of the sectors 142 and therefore the radial release of the rotor or stator cores 122. The movement of the pin 140 in the direction that actuates the locking of the rotor or stator cores 122 is contrasted by a spring 143.

The radial locking members 132 can comprise also a fluid-operated cylinder 133 carried by a corresponding supporting element 134 that can be fixed to the second support 6 so that the stem of the piston of the fluid-operated cylinder 133 passes through the tailstock 9 and the connecting element 125 until it reaches the axial end of the pin 140 that is directed toward the tailstock 9.

The actuation of the fluid-operated cylinder 133 pushes the pin 140 toward the spindle 8, actuating the radial locking of the rotor or stator cores 122 on the supporting shaft 123.

Optionally, the fluid-operated cylinder 133 might also not be present and the radial locking of the rotor or stator cores 122 might be performed by using simply, like for axial locking, the movement of the second support 6 toward the first support 5.

The fourth apparatus also comprises a device 136 for dispensing the wire 139 and a device 137 for cutting the wire 139, which are shown in Figures 42, 43, 44 and can be constituted by the device for dispensing the wire and by the device for cutting the wire already shown in Figures 8, 9, 10 with reference to the first apparatus. The device 136 for dispensing the wire 139 and the device 137 for cutting the wire 139 are mounted on a corresponding supporting structure 138 that is intended to be fixed to the third support 12 in a manner similar to what has already been described with reference to the first apparatus.

With reference to Figures 45 to 47, use of the machine with the fourth apparatus is as follows.

The connecting elements 124, 125 are associated respectively with the spindle 8 and with the tailstock 9. The supporting shaft 123 with the rotor or stator cores 122 to be wound mounted thereon is inserted with its ends in the cradles 130, 131 and the second support 6 is moved closer to the first support 5 by actuating the fluid-operated cylinder 18 so as to lock axially the core supporting element 121. If provided, the fluid-operated cylinder 133 is actuated so as to further lock the rotor or stator cores 122 on the supporting shaft 123.

The device 136 for dispensing the wire 139 is moved closer, by utilizing the possibility of movement along the three axes 13, 14, 15 of the third support 12, to one of the rotor or stator cores 122 carried by the supporting shaft 123 and the dispensing of the wire 139 begins so that the initial end thereof engages one of the engagement points 135 provided on the rotor or stator core 122. The spindle 8 is actuated with a rotary motion about its own axis 7 so as to cause the rotation of the rotor or stator cores 122 about the axis 7 of the spindle 8 and of the tailstock 9 and therefore so as to actuate the progressive winding of the wire 139 around the rotor or stator core 122, while the device 136 for dispensing the wire 139 is moved parallel to the axis 7 of the spindle 8 and of the tailstock 9 in order to produce the layering of the wire 139 during its winding around the rotor or stator core 122.

Once the winding of a rotor or stator core 122 has ended, the spindle 8 is stopped and the device 136 for dispensing the wire 139 is moved parallel to the axis 7 of the spindle 8 and of the tailstock 9 in order to arrange it at another rotor or stator core 122, which is then wound by actuating the spindle 8 with a rotary motion in a manner similar to the previous one.

Once all the rotor or stator cores 122 carried by the supporting shaft 123 have been wound, the spindle 8 is stopped, the fluid-operated cylinder 18 is actuated so as to disengage the supporting shaft 123, which is removed from the connecting elements 124, 125 in order to be replaced by another supporting shaft that carries new rotor or stator cores to be wound.

In practice it has been found that the machine according to the invention achieves fully the intended aim, since it is capable of producing, on a same machine, different types of windings of rotor or stator cores.

The machine thus conceived is susceptible of numerous modifications and variations, all of which are within the scope of the appended claims.

In practice, the materials employed, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A machine for producing wire windings on rotor or stator cores, comprising:
- a main supporting structure (2);
- a first support (5), which is associated with said main supporting structure (2);
- a spindle (8) with a horizontal axis (7), which is supported so that it can rotate about its own axis (7) by said first support (5) and can be actuated with a rotary motion about its own axis (7);
- a second support (6), which is associated with said main supporting structure (2);
- a tailstock (9), which is arranged opposite and coaxially with respect to said spindle (8) and is supported so that it can rotate about its own axis by said second support (6);
- a third support (12), which is supported by said main supporting structure (2) and can move on command along three mutually perpendicular axes (13, 14, 15), respectively along two horizontal axes (13, 14) and along a vertical axis (15);
at least one between said first support (5) and said second support (6) being movable with respect to the other along a direction that is parallel to the axis (7) of said spindle (8) and of said tailstock (9) and said third support (12) being provided with means for detachable engagement with components (62, 64, 81, 102, 136, 137) of equipment for dispensing and/or cutting wires (67, 86, 109, 139) to be wound around rotor or stator cores (53, 72, 93, 122) that can be fitted between said spindle (8) and said tailstock (9);
**characterized in that** said spindle (8) and said tailstock (9) are configured for being connected to at least one apparatus for wounding rotor or stator cores, wherein, in order to render the machine capable of producing different types of windings, said spindle (8) and said tailstock (9) are adapted to take different types of winding configurations including at least one of the following winding configurations, each configuration being associated to a respective apparatus:
a) a configuration in which said rotor or stator cores are arranged mutually side by side parallel to the axis (7) of said spindle (8) and of said tailstock (9);
b) a configuration in which said rotor or stator cores (93) are arranged so that their axes lie on a plane that is perpendicular to the axis (7) of said spindle (8) and of said tailstock (9) and are arranged so as to be radially and angularly mutually spaced around the axis (7) of said spindle (8) and of said tailstock (9);
c) a configuration in which said rotor or stator cores (122) are arranged coaxially to said spindle (8) and to said tailstock (9).

2. The machine according to claim 1, **characterized in that** it comprises a fourth support (31), which is associated with said main supporting structure (2) between said spindle (8) and said tailstock (9), said fourth support (31) being movable on command along a vertical axis (36a) and so that it can rotate about said vertical axis (36a); said fourth support (31) being engageable detachably with at least one component (51) of an apparatus adapted to support the rotor or stator cores (53) arranged between said spindle (8) and said tailstock (9).

3. The machine according to claim 1 or 2, **characterized in that** said spindle (8) and said tailstock (9) are further adapted to take a winding configuration associated to a respective apparatus in which said rotor or stator cores (53) are arranged so that their axes lie on a plane that passes through the axis (7) of said spindle (8) and of said tailstock (9) and are arranged radially and so as to be angularly mutually spaced around an axis (52) that is perpendicular to the axis (7) of said spindle (8) and of said tailstock (9).

4. The machine according to claim 1, **characterized in that** said first support (5) and said second support (6) are mounted on sliding guides (16, 17), which are fixed to said main supporting structure (2) and run parallel to the axis (7) of said spindle (8) and of said tailstock (9); there being provided at least one fluid-operated cylinder (18) that is interposed between said second support (6) and said main supporting structure (2) and can be actuated to cause the movement of said second support (6) along the corresponding sliding guides (17).

5. The machine according to one or more of the preceding claims, **characterized in that** it comprises a first apparatus for winding rotor or stator cores (53) that are arranged so that their axes lie on a plane that passes through the axis (7) of said spindle (8) and of said tailstock (9) and are arranged radially and so as to be angularly mutually spaced around an axis (52) that is perpendicular to the axis (7) of said spindle (8) and of said tailstock (9).

6. The machine according to claim 5 **characterized in that** said first apparatus comprises:
- a core supporting platform (51), which is adapted to support rotor or stator cores (53) that can be arranged radially on the peripheral region of said core supporting platform (51) so that their axes are arranged radially with respect to the axis (52) of said core supporting platform (51) and are mutually angularly spaced around the axis (52) of said core supporting platform (51); said core supporting platform (51) being lockable between said spindle (8) and said tailstock (9) with, in each instance, at least one rotor or stator core (53) arranged coaxially to said spindle (8) and to said tailstock (9);
- a device (62) for dispensing the wire (67) to be wound around the rotor or stator cores (53);
- a device (64) for cutting the wire (67);
said device (62) for dispensing the wire (67) and said device (64) for cutting the wire (67) being associable detachably with said third support (12); said fourth support (31) being engageable detachably with said core supporting platform (51), which is arranged so that its axis (52) is vertical and coincides with said vertical axis (36a), and being rotatable about said vertical axis (36a) for the rotation of said core supporting platform (51) about its axis (52), disengaged from said spindle (8) and from said tailstock (9), in order to position, in each instance, at least one of said rotor or stator cores (53) coaxially to said spindle (8) and to said tailstock (9); said spindle (8) being actuatable with a rotary motion about its own axis (7) and said third support (12) being movable parallel to the axis (7) of said spindle (8) in order to actuate, in each instance, the winding of the wire (67), dispensed by said device (62) for dispensing the wire (67), around the rotor or stator core (53) that is arranged coaxially to said spindle (8) and to said tailstock (9).

7. The machine according to one or more of the preceding claims, **characterized in that** it comprises a second apparatus for winding rotor or stator cores (72) that are arranged mutually side by side parallel to the axis (7) of said spindle (8) and of said tailstock (9).

8. The machine according to claim 7, **characterized in that** said second apparatus comprises:
- a core supporting element (71), which is adapted to support a plurality of rotor or stator cores (72) arranged mutually side by side;
- elements (73, 74) for connecting the opposite ends of said core supporting element (71) to said spindle (8) and to said tailstock (9);
- at least one oscillating device (81) for dispensing the wire (86) to be wound around the rotor or stator cores (72), which can be associated detachably with said third support (12);
- at least one device (84) for cutting the wire (86), which can be associated detachably with said main supporting structure (2);
said third support (12) being actuatable in order to actuate, in each instance, the winding of at least one wire (86), dispensed by said oscillating device (81) for dispensing the wire (86), around at least one rotor or stator core (72) and said at least one device (84) for cutting the wire (86) being actuatable to engage, in each instance, a wire (86) in order to cut it at the end of the winding of at least one rotor or stator core (72).

9. The machine according to one or more of the preceding claims, **characterized in that** it comprises a third apparatus for winding rotor or stator cores (93) that are arranged so that their axes lie on a plane that is perpendicular to the axis (7) of said spindle (8) and of said tailstock (9) and are arranged so as to be radially and angularly mutually spaced around the axis (7) of said spindle (8) and of said tailstock (9).

10. The machine according to claim 9, **characterized in that** said third apparatus comprises:
- an element (91) for detachable support and locking of a core supporting ring (92) that supports a plurality of rotor or stator cores (93) that are arranged so that their axes are mutually spaced radially and angularly around the axis (94) of said core supporting ring (92);
- means (96, 97) for connecting said detachable supporting and locking element (91) of the core supporting ring (92) to said spindle (8) so that the axis (94) of said core supporting ring (92) coincides with the axis (7) of said spindle and of said tailstock (9);
- a supporting shaft (106), which can be associated with said tailstock (9) and can engage the end of said detachable supporting and locking element (91) that is opposite with respect to said spindle (8);
- an oscillating device (102) for dispensing the wire (109) to be wound around the rotor or stator cores (93), which can be associated detachably with said third support (12);
- a device (105) for cutting the wire (109), which can be associated detachably with said main supporting structure (2);
said spindle (8) being actuatable with a rotary motion about its own axis (7) in order to rotate said element (91) for the detachable support and locking of the core supporting ring (92) about its own axis (94) in order to arrange, in each instance, a rotor or stator core (93) at said oscillating device (102) for dispensing the wire (109); said third support (12) being actuatable in order to actuate, in each instance, the winding of the wire (109), dispensed by said oscillating device (102) for dispensing the wire (109), around one of said stator or rotor cores (93); said device (105) for cutting the wire (109) being actuatable to engage, in each instance, the wire (109) in order to cut it at the end of the winding of at least one rotor or stator core (93).

11. The machine according to one or more of the preceding claims, **characterized in that** it comprises a fourth apparatus for winding rotor or stator cores (122) that are arranged coaxially to said spindle (8) and to said tailstock (9).

12. The machine according to claim 11, **characterized in that** said fourth apparatus comprises:
- a core supporting element (121), adapted to support a plurality of rotor or stator cores (122) arranged coaxially to each other;
- a device (136) for dispensing the wire (139) to be wound around the rotor or stator cores (122);
- a device (137) for cutting the wire (139);
said device (136) for dispensing the wire (139) and said device (137) for cutting the wire (139) being detachably associable with said third support (12); said spindle (8) being actuatable with a rotary motion about its own axis (7) and said third support (12) being actuatable in order to actuate, in each instance, the winding of the wire (139), dispensed by said device (136) for dispensing the wire (139), around at least one rotor or stator core (122).

## Patentansprüche

1. Eine Maschine zur Herstellung von Drahtwicklungen auf Rotor- oder Statorkernen, die Folgendes umfasst:
- eine tragende Hauptstruktur (2);
- einen ersten Träger (5), der mit der tragenden Hauptstruktur (2) verbunden ist;
- eine Spindel (8) mit horizontaler Achse (7), die drehbar um ihre eigene Achse (7) von dem ersten Träger (5) getragen ist und mit einer Drehbewegung um ihre eigene Achse (7) angetrieben werden kann;
- einen zweiten Träger (6), der mit der tragenden Hauptstruktur (2) verbunden ist;
- einen Reitstock (9), der gegenüber und koaxial mit der Spindel (8) angeordnet ist und um seine eigene Achse drehbar von dem zweiten Träger (6) getragen ist;
- einen dritten Träger (12), der von der tragenden Hauptstruktur (2) getragen ist und sich auf Befehl entlang dreier zueinander senkrechter Achsen (13, 14, 15), das heißt, entlang zweier horizontaler Achsen (13, 14) und einer vertikalen Achse (15), bewegen kann;
wobei der erste Träger (5) und/oder der zweite Träger (6) im Verhältnis zueinander in einer Richtung beweglich sind, die parallel zur Achse (7) der Spindel (8) und des Reitstocks (9) ist, und wobei der dritte Träger (12) mit Mitteln für den lösbaren Eingriff mit Komponenten (62, 64, 81, 102, 136, 137) von Ausrüstung zum Abgeben und/oder Schneiden von Drähten (67, 86, 109, 139) ausgestattet ist, die um Rotor- oder Statorkerne (53, 72, 93, 122) gewickelt werden sollen, die zwischen der Spindel (8) und dem Reitstock (9) eingesetzt werden können;
**dadurch gekennzeichnet, dass** die Spindel (8) und der Reitstock (9) ausgebildet sind, um mit mindestens einer Vorrichtung zum Wickeln von Rotor- oder Statorkernen verbunden zu werden, wobei, um die Maschine in die Lage zu versetzen, verschiedene Arten von Wicklungen zu erzeugen, die Spindel (8) und der Reitstock (9) ausgebildet sind, um verschiedene Arten von Wickelkonfigurationen einzunehmen, einschließlich mindestens einer der folgenden Wickelkonfigurationen, wobei jede Konfiguration mit einer entsprechenden Vorrichtung verknüpft ist:
a)einer Konfiguration, in welcher die Rotor- oder Statorkerne parallel zur Achse (7) der Spindel (8) und des Reitstocks (9) nebeneinander angeordnet sind;
b)einer Konfiguration, in welcher die Rotor- oder Statorkerne (93) so angeordnet sind, dass ihre Achsen auf einer Ebene liegen, die senkrecht zur Achse (7) der Spindel (8) und des Reitstocks (9) ist, und angeordnet sind, um radial und winklig um die Achse (7) der Spindel (8) und des Reitstocks (9) voneinander beabstandet zu sein;
c)einer Konfiguration, in welcher die Rotor- oder Statorkerne (122) koaxial mit der Spindel (8) und dem Reitstock (9) angeordnet sind.

2. Die Maschine gemäß Anspruch 1, **dadurch gekennzeichnet, dass** sie einen vierten Träger (31) umfasst, der zwischen der Spindel (8) und dem Reitstock (9) mit der tragenden Hauptstruktur (2) verbunden ist; wobei der vierte Träger (31) auf Befehl entlang einer vertikalen Achse (36a) so beweglich ist, dass er sich um die vertikale Achse (36a) drehen kann; wobei der vierte Träger (31) lösbar mit mindestens einer Komponente (51) einer Vorrichtung in Eingriff gebracht werden kann, die ausgebildet ist, um die Rotor- oder Statorkerne (53) zu tragen, angeordnet zwischen der Spindel (8) und dem Reitstock (9).

3. Die Maschine gemäß Anspruch 1 oder 2, **dadurch gekennzeichnet, dass** die Spindel (8) und der Reitstock (9) weiter ausgebildet sind, um eine Wickelkonfiguration einzunehmen, die mit einer entsprechenden Vorrichtung verknüpft ist, in welcher die Rotor- oder Statorkerne (53) so angeordnet sind, dass ihre Achsen auf einer Ebene liegen, die durch die Achse (7) der Spindel (8) und des Reitstocks (9) verläuft, und radial und so angeordnet sind, dass sie winklig voneinander um eine Achse (52) beabstandet sind, die senkrecht zur Achse (7) der Spindel (8) und des Reitstocks (9) ist.

4. Die Maschine gemäß Anspruch 1, **dadurch gekennzeichnet, dass** der erste Träger (5) und der zweite Träger (6) auf Gleitführungen (16, 17) montiert sind, welche an der tragenden Hauptstruktur (2) befestigt sind und parallel zur Achse (7) der Spindel und des Reitstocks (9) verlaufen; wobei mindestens ein fluidbetätigter Zylinder (18) bereitgestellt ist, der zwischen dem zweiten Träger (6) und der tragenden Hauptstruktur (2) angeordnet ist und betätigt werden kann, um die Bewegung des zweiten Trägers (6) entlang den entsprechenden Gleitführungen (17) zu veranlassen.

5. Die Maschine gemäß einem oder mehreren der obigen Ansprüche, **dadurch gekennzeichnet, dass** sie eine erste Vorrichtung zum Wickeln von Rotor- oder Statorkernen (53) umfasst, die so angeordnet sind, dass ihre Achsen auf einer Ebene liegen, die durch die Achse (7) der Spindel (8) und des Reitstocks (9) verläuft, und radial und so angeordnet sind, dass sie winklig voneinander um eine Achse (52) beabstandet sind, die senkrecht zur Achse (7) der Spindel (8) und des Reitstocks (9) ist.

6. Die Maschine gemäß Anspruch 5, **dadurch gekennzeichnet, dass** die erste Vorrichtung Folgendes umfasst:
- eine kerntragende Plattform (51), die ausgebildet ist, um Rotor- oder Statorkerne (53) zu tragen, die radial auf dem peripheren Bereich der kerntragenden Plattform (51) angeordnet werden können, so dass ihre Achsen radial zur Achse (52) der kerntragenden Plattform (51) angeordnet und winklig voneinander um die Achse (52) der kerntragenden Plattform (51) beabstandet sind; wobei die kerntragende Plattform (51) zwischen der Spindel (8) und dem Reitstock (9) blockiert werden kann, wobei in jedem Fall mindestens ein Rotor- oder Statorkern (53) koaxial mit der Spindel (8) und mit dem Reitstock (9) angeordnet ist;
- eine Vorrichtung (62) zum Abgeben des Drahts (67), der um die Rotor- oder Statorkerne (53) gewickelt werden soll;
- eine Vorrichtung (64) zum Schneiden des Drahts (67);
wobei die Vorrichtung (62) zum Abgeben des Drahts (67) und die Vorrichtung (64) zum Schneiden des Drahts (67) lösbar mit dem dritten Träger (12) verbindbar sind; wobei der vierte Träger (31) lösbar mit der kerntragenden Plattform (51) in Eingriff gebracht werden kann, die so angeordnet ist, dass ihre Achse (52) vertikal ist und mit der vertikalen Achse (36a) zusammenfällt; und um die vertikale Achse (36a) drehbar ist zur Drehung der kerntragenden Plattform (51) um ihre Achse (52), getrennt von der Spindel (8) und von dem Reitstock (9), um in jedem Fall mindestens einen der Rotor- oder Statorkerne (53) koaxial mit der Spindel (8) und mit dem Reitstock (9) zu positionieren; wobei die Spindel (8) mit einer Drehbewegung um ihre eigene Achse (7) angetrieben werden kann und der dritte Träger (12) parallel zur Achse (7) der Spindel (8) beweglich ist, um in jedem Fall das Wickeln des Drahts (67), der von der Vorrichtung (62) zum Abgeben des Drahts (67) abgegeben wird, um den Rotor- oder Statorkern (53) anzutreiben, der koaxial mit der Spindel (8) und mit dem Reitstock (9) angeordnet ist.

7. Die Maschine gemäß einem oder mehreren der obigen Ansprüche, **dadurch gekennzeichnet, dass** sie eine zweite Vorrichtung zum Wickeln von Rotor- oder Statorkernen (72) umfasst, die nebeneinander parallel zur Achse (7) der Spindel (8) und des Reitstocks (9) angeordnet sind.

8. Die Maschine gemäß Anspruch 7, **dadurch gekennzeichnet, dass** die zweite Vorrichtung Folgendes umfasst:
- ein kerntragendes Element (71), das ausgebildet ist, um eine Vielzahl von Rotor- oder Statorkernen (72) zu tragen, die nebeneinander angeordnet sind;
- Elemente (73, 74) zum Verbinden der gegenüberliegenden Enden des kerntragenden Elements (71) mit der Spindel (8) und mit dem Reitstock (9) ;
- mindestens eine oszillierende Vorrichtung (81) zur Abgabe des Drahts (86), der um die Rotor- oder Statorkerne (72) gewickelt werden soll, die lösbar mit dem dritten Träger (12) verbunden werden kann;
- mindestens eine Vorrichtung (84) zum Schneiden des Drahts (86), die lösbar mit der tragenden Hauptstruktur (2) verbunden werden kann;
wobei der dritte Träger (12) angetrieben werden kann, um in jedem Fall das Wickeln mindestens eines Drahts (86), der von der oszillierenden Vorrichtung (81) für die Abgabe des Drahts (86) abgegeben wird, um mindestens einen Rotor- oder Statorkern (72) anzutreiben; und wobei die mindestens eine Vorrichtung (84) zum Schneiden des Drahts (86) angetrieben werden kann, um in jedem Fall einen Draht (86) zu greifen, um ihn am Ende des Wickelvorgangs um mindestens einen Rotor- oder Statorkern (72) abzuschneiden.

9. Die Maschine gemäß einem oder mehreren der obigen Ansprüche, **dadurch gekennzeichnet, dass** sie eine dritte Vorrichtung zum Wickeln von Rotor- oder Statorkernen (93) umfasst, die so angeordnet sind, dass ihre Achsen auf einer Ebene liegen, welche senkrecht zur Achse (7) der Spindel (8) und des Reitstocks (9) ist, und so angeordnet sind, dass sie radial und winklig voneinander um die Achse (7) der Spindel (8) und des Reitstocks (9) herum beabstandet sind.

10. Die Maschine gemäß Anspruch 9, **dadurch gekennzeichnet, dass** die dritte Vorrichtung Folgendes umfasst:
- ein Element (91) zum lösbaren Tragen und Blockieren eines Kern-Tragrings (92), der eine Vielzahl von Rotor- oder Statorkernen (93) trägt, die so angeordnet sind, dass ihre Achsen voneinander radial und winklig um die Achse (94) des Kern-Tragrings (92) beabstandet sind;
- Mittel (96, 97) zum Verbinden des lösbaren Trag- und Blockierelements (91) des Kern-Tragrings (92) mit der Spindel (8), so dass die Achse (94) des Kern-Tragrings (92) mit der Achse (7) der Spindel und des Reitstocks (9) zusammenfällt;
- eine tragende Welle (106), die mit dem Reitstock (9) verbunden werden und in das Ende des lösbaren Trag- und Blockierelements (91) eingreifen kann, das der Spindel (8) gegenüberliegt;
- eine oszillierende Vorrichtung (102) für die Abgabe des Drahts (109), der um die Rotor- oder Statorkerne (93) gewickelt werden soll, die lösbar mit dem dritten Träger (12) verbunden werden kann;
- eine Vorrichtung (105) zum Schneiden des Drahts (109), die lösbar mit der tragenden Hauptstruktur (2) verbunden werden kann;
wobei die Spindel (8) mit einer Drehbewegung um ihre eigene Achse (7) angetrieben werden kann, um das Element (91) zum lösbaren Tragen und Blockieren des Kern-Tragrings (92) um seine eigene Achse (94) zu drehen, um in jedem Fall einen Rotor- oder Statorkern (93) an der oszillierenden Vorrichtung (102) für die Abgabe des Drahts (109) anzuordnen; wobei der dritte Träger (12) angetrieben werden kann, um in jedem Fall das Wickeln des Drahts (109), der von der oszillierenden Vorrichtung (102) für die Abgabe des Drahts (109) abgegeben wird, um einen der Stator- oder Rotorkerne (93) anzutreiben; wobei die Vorrichtung (105) zum Schneiden des Drahts (109) angetrieben werden kann, um in jedem Fall den Draht (109) zu greifen, um ihn am Ende des Wickelvorgangs um mindestens einen Rotor- oder Statorkern (93) abzuschneiden.

11. Die Maschine gemäß einem oder mehreren der obigen Ansprüche, **dadurch gekennzeichnet, dass** sie eine vierte Vorrichtung zum Wickeln von Rotor- oder Statorkernen (122) umfasst, die koaxial mit der Spindel (8) und mit dem Reitstock (9) angeordnet sind.

12. Die Maschine gemäß Anspruch 11, **dadurch gekennzeichnet, dass** die vierte Vorrichtung Folgendes umfasst:
- ein kerntragendes Element (121), ausgebildet, um eine Vielzahl von Rotor- oder Statorkernen (122) zu tragen, die koaxial miteinander angeordnet sind;
- eine Vorrichtung (136) für die Abgabe des Drahts (139), der um die Rotor- oder Statorkerne (122) gewickelt werden soll;
- eine Vorrichtung (137) zum Schneiden des Drahts (139);
wobei die Vorrichtung (136) für die Abgabe des Drahts (139) und die Vorrichtung (137) zum Schneiden des Drahts (139) lösbar mit dem dritten Träger (12) verbindbar sind; wobei die Spindel (8) mit einer Drehbewegung um ihre eigene Achse (7) angetrieben werden kann und der dritte Träger (12) angetrieben werden kann, um in jedem Fall das Wickeln des Drahts (139), der von der Vorrichtung (136) für die Abgabe des Drahts (139) abgegeben wird, um mindestens einen Rotor- oder Statorkern (122) anzutreiben.

## Revendications

1. Machine destinée à produire des enroulements de fils sur des noyaux de rotor ou de stator, comportant
- une structure de support principale (2),
- un premier support (5), qui est associé à ladite structure de support principale (2),
- une broche (8) avec un axe horizontal (7), qui est supportée de sorte qu'elle peut être mise en rotation autour de son axe propre (7) par ledit premier support (5) et peut être actionnée avec un mouvement de rotation autour de son axe propre (7),
- un deuxième support (6), qui est associé à ladite structure de support principale (2),
- une contre-poupée (9), qui est agencée à l'opposé et coaxialement par rapport à ladite broche (8) et est supportée de sorte qu'elle peut être mise en rotation autour de son axe propre par ledit deuxième support (6),
- un troisième support (12), qui est supporté par ladite structure de support principale (2) et peut se déplacer sur instruction le long de trois axes (13, 14, 15) mutuellement perpendiculaires, respectivement le long de deux axes horizontaux (13, 14) et le long d'un axe vertical (15),
au moins un support entre ledit premier support (5) et ledit deuxième support (6) étant mobile par rapport à l'autre le long d'une direction qui est parallèle à l'axe (7) de ladite broche (8) et de ladite contre-poupée (9), et ledit troisième support (12) étant pourvu de moyens pour une prise détachable avec des composants (62, 64, 81, 102, 136, 137) d'équipements pour distribuer et/ou couper des fils (67, 86, 109, 139) à enrouler autour de noyaux de rotor ou de stator (53, 72, 93, 122) qui peuvent être insérés entre ladite broche (8) et ladite contre-poupée (9),
**caractérisée en ce que** ladite broche (8) et ladite contre-poupée (9) sont configurées pour être reliées à au moins un appareil pour bobiner des noyaux de rotor ou de stator, dans laquelle, afin de rendre la machine capable de produire différents types d'enroulements, ladite broche (8) et ladite contre-poupée (9) sont adaptées pour prendre différents types de configurations d'enroulement incluant au moins une des configurations d'enroulement suivantes, chaque configuration étant associée à un appareil respectif :
a) une configuration dans laquelle lesdits noyaux de rotor ou de stator sont agencés mutuellement côte à côte parallèlement à l'axe (7) de ladite broche (8) et de ladite contre-poupée (9),
b) une configuration dans laquelle lesdits noyaux de rotor ou de stator (93) sont agencés de sorte que leurs axes se situent sur un plan qui est perpendiculaire à l'axe (7) de ladite broche (8) et de ladite contre-poupée (9) et sont agencés de manière à être radialement et angulairement mutuellement espacés autour de l'axe (7) de ladite broche (8) et de ladite contre-poupée (9),
c) une configuration dans laquelle lesdits noyaux de rotor ou de stator (122) sont agencés coaxialement à ladite broche (8) et à ladite contre-poupée (9).

2. Machine selon la revendication 1, **caractérisée en ce qu'**elle comporte un quatrième support (31), qui est associé à ladite structure de support principale (2) entre ladite broche (8) et ladite contre-poupée (9), ledit quatrième support (31) étant mobile sur instruction le long d'un axe vertical (36a) et de sorte qu'il peut tourner autour dudit axe vertical (36a), ledit quatrième support (31) pouvant venir en prise de manière détachable avec au moins un composant (51) d'un appareil adapté pour supporter les noyaux de rotor ou de stator (53) agencés entre ladite broche (8) et ladite contre-poupée (9).

3. Machine selon la revendication 1 ou 2, **caractérisée en ce que** ladite broche (8) et ladite contre-poupée (9) sont en outre adaptées pour prendre une configuration d'enroulement associée à un appareil respectif dans lequel lesdits noyaux de rotor ou de stator (53) sont agencés de sorte que leurs axes se situent sur un plan qui passe par l'axe (7) de ladite broche (8) et de ladite contre-poupée (9) et sont agencés radialement et de manière à être angulairement mutuellement espacés autour d'un axe (52) qui est perpendiculaire à l'axe (7) de ladite broche (8) et de ladite contre-poupée (9).

4. Machine selon la revendication 1, **caractérisée en ce que** ledit premier support (5) et ledit deuxième support (6) sont montés sur des guides coulissants (16, 17), qui sont fixés à ladite structure de support principale (2) et s'étendent parallèlement à l'axe (7) de ladite broche (8) et de ladite contre-poupée (9), au moins un vérin commandé par un fluide (18) y étant agencé, lequel vérin est intercalé entre ledit deuxième support (6) et ladite structure de support principale (2) et peut être actionné pour entraîner le mouvement du deuxième support (6) le long des guides coulissants (17) correspondants.

5. Machine selon une ou plusieurs des revendications précédentes, **caractérisée en ce qu'**elle comporte un premier appareil pour enrouler des noyaux de rotor ou de stator (53) qui sont agencés de sorte que leurs axes se situent sur un plan qui passe par l'axe (7) de ladite broche (8) et de ladite contre-poupée (9) et sont agencés radialement et de manière à être angulairement mutuellement espacés autour d'un axe (52) qui est perpendiculaire à l'axe (7) de ladite broche (8) et de ladite contre-poupée (9).

6. Machine selon la revendication 5, **caractérisée en ce que** ledit premier appareil comporte :
- une plate-forme de support de noyaux (51), qui est adaptée pour supporter des noyaux de rotor ou de stator (53) qui peuvent être agencés radialement sur la zone périphérique de ladite plate-forme de support de noyaux (51) de sorte que leurs axes sont agencés radialement par rapport à l'axe (52) de ladite plate-forme de support de noyaux (51) et sont mutuellement angulairement espacés autour de l'axe (52) de ladite plate-forme de support de noyaux (51), ladite plate-forme de support de noyaux (51) pouvant être bloquée entre ladite broche (8) et ladite contre-poupée (9) avec, dans chaque cas, au moins un noyau de rotor ou de stator (53) agencé coaxialement à ladite broche (8) et à ladite contre-poupée (9),
- un dispositif (62) pour distribuer le fil (67) à enrouler autour des noyaux de rotor ou de stator (53),
- un dispositif (64) pour couper le fil (67),
ledit dispositif (62) pour distribuer le fil (67) et ledit dispositif (64) pour couper le fil (67) pouvant être associés audit troisième support (12) de manière détachable, ledit quatrième support (31) pouvant venir en prise de manière détachable avec ladite plate-forme de support de noyaux (51), qui est agencée de sorte que son axe (52) est vertical et coïncide avec ledit axe vertical (36a), et pouvant tourner autour dudit axe vertical (36a) pour la rotation de ladite plate-forme de support de noyaux (51) autour de son axe (52), libérée de ladite broche (8) et de ladite contre-poupée (9), afin de positionner, dans chaque cas, au moins un desdits noyaux de rotor ou de stator (53) coaxialement à ladite broche (8) et à ladite contre-poupée (9), ladite broche (8) pouvant être actionnée avec un mouvement de rotation autour de son axe propre (7) et ledit troisième support (12) étant mobile parallèlement à l'axe (7) de ladite broche (8) afin d'actionner, dans chaque cas, l'enroulement du fil (67), distribué par ledit dispositif (62) pour distribuer le fil (67), autour du noyau de rotor ou de stator (53) qui est agencé coaxialement à ladite broche (8) et à ladite contre-poupée (9).

7. Machine selon une ou plusieurs des revendications précédentes, **caractérisée en ce qu'**elle comporte un deuxième appareil pour enrouler des noyaux de rotor ou de stator (72) qui sont agencés mutuellement côte à côte parallèlement à l'axe (7) de ladite broche (8) et de ladite contre-poupée (9).

8. Machine selon la revendication 7, **caractérisée en ce que** ledit deuxième appareil comporte :
- un élément de support de noyaux (71), qui est adapté pour supporter une pluralité de noyaux de rotor ou de stator (72) agencés mutuellement côte à côte,
- des éléments (73, 74) pour relier les extrémités opposées dudit élément de support de noyaux (71) à ladite broche (8) et à ladite contre-poupée (9),
- au moins un dispositif oscillant (81) pour distribuer le fil (86) à enrouler autour des noyaux de rotor ou de stator (72), qui peut être associé audit troisième support (12) de manière détachable,
- au moins un dispositif (84) pour couper le fil (86), qui peut être associé à ladite structure de support principale (2) de manière détachable,
ledit troisième support (12) pouvant être actionné afin d'actionner, dans chaque cas, l'enroulement d'au moins un fil (86), distribué par ledit dispositif oscillant (81) pour distribuer le fil (86), autour d'au moins un noyau de rotor ou de stator (72) et ledit au moins un dispositif (84) pour couper le fil (86) pouvant être actionné pour engager, dans chaque cas, un fil (86) afin de le couper à la fin de l'enroulement d'au moins un noyau de rotor ou de stator (72).

9. Machine selon une ou plusieurs des revendications précédentes, **caractérisée en ce qu'**elle comporte un troisième appareil pour enrouler des noyaux de rotor ou de stator (93) qui sont agencés de sorte que leurs axes se situent sur un plan qui est perpendiculaire à l'axe (7) de ladite broche (8) et de ladite contre-poupée (9) et sont agencés de manière à être radialement et angulairement mutuellement espacés autour de l'axe (7) de ladite broche (8) et de ladite contre-poupée (9).

10. Machine selon la revendication 9, **caractérisée en ce que** ledit troisième appareil comporte :
- un élément (91) pour un support et un blocage détachable d'une couronne de support de noyaux (92) qui supporte une pluralité de noyaux de rotor ou de stator (93) qui sont agencés de sorte que leurs axes sont mutuellement espacés radialement et angulairement autour de l'axe (94) de ladite couronne de support de noyaux (92),
- des moyens (96, 97) pour relier ledit élément de support et de blocage détachable (91) de la couronne de support de noyaux (92) à ladite broche (8) de sorte que l'axe (94) de ladite couronne de support de noyaux (92) coïncide avec l'axe (7) de ladite broche et de ladite contre-poupée (9),
- un arbre de support (106), qui peut être associé à ladite contre-poupée (9) et peut venir en prise avec l'extrémité dudit élément de support et de blocage détachable (91) qui est opposée par rapport à ladite broche (8),
- un dispositif oscillant (102) pour distribuer le fil (109) à enrouler autour des noyaux de rotor ou de stator (93), qui peut être associé audit troisième support (12) de manière détachable,
- un dispositif (105) pour couper le fil (109), qui peut être associé à ladite structure de support principale (2) de manière détachable,
ladite broche (8) pouvant être actionnée avec un mouvement de rotation autour de son axe propre (7) afin de faire tourner ledit élément (91) pour le support et le blocage détachable de la couronne de support de noyaux (92) autour de son axe propre (94) afin d'agencer, dans chaque cas, un noyau de rotor ou de stator (93) sur ledit dispositif oscillant (102) pour distribuer le fil (109), ledit troisième support (12) pouvant être actionné afin d'actionner, dans chaque cas, l'enroulement du fil (109), distribué par ledit dispositif oscillant (102) pour distribuer le fil (109), autour de l'un desdits noyaux de stator ou de rotor (93), ledit dispositif (105) pour couper le fil (109) pouvant être actionné pour engager, dans chaque cas, le fil (109) afin de le couper à la fin de l'enroulement d'au moins un noyau de rotor ou de stator (93) .

11. Machine selon une ou plusieurs des revendications précédentes, **caractérisée en ce qu'**elle comporte un quatrième appareil pour enrouler des noyaux de rotor ou de stator (122) qui sont agencés coaxialement à ladite broche (8) et à ladite contre-poupée (9).

12. Machine selon la revendication 11, **caractérisée en ce que** ledit quatrième appareil comporte :
- un élément de support de noyaux (121), adapté pour supporter une pluralité de noyaux de rotor ou de stator (122) agencés coaxialement les uns aux autres,
- un dispositif (136) pour distribuer le fil (139) à enrouler autour des noyaux de rotor ou de stator (122),
- un dispositif (137) pour couper le fil (139),
- ledit dispositif (136) pour distribuer le fil (139) et ledit dispositif (137) pour couper le fil (139) pouvant être associés audit troisième support (12) de manière détachable, ladite broche (8) pouvant être actionnée avec un mouvement de rotation autour de son axe propre (7) et ledit troisième support (12) pouvant être actionné afin d'actionner, dans chaque cas, l'enroulement du fil (139), distribué par ledit dispositif (136) pour distribuer le fil (139), autour d'au moins un noyau de rotor ou de stator (122).
